(19) Europäisches Patentamt
European Patent Office
Office européen des brevets

(11) **EP 2 479 401 A1**

(12) **EUROPEAN PATENT APPLICATION**
published in accordance with Art. 153(4) EPC

(43) Date of publication:
**25.07.2012 Bulletin 2012/30**

(51) Int Cl.:
*F02B 39/16* (2006.01)     *F02B 37/013* (2006.01)

(21) Application number: **09849542.7**

(22) Date of filing: **18.09.2009**

(86) International application number:
**PCT/JP2009/066863**

(87) International publication number:
**WO 2011/033686 (24.03.2011 Gazette 2011/12)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Toyota Jidosha Kabushiki Kaisha Toyota-shi, Aichi 471-8571 (JP)**

(72) Inventors:
• **IBUKI, Taku**
**Toyota-shi**
**Aichi 471-8571 (JP)**

• **TOMITA, Tetsuji**
**Toyota-shi**
**Aichi 471-8571 (JP)**
• **HIROSAWA Yoshihisa**
**Toyota-shi**
**Aichi 471-8571 (JP)**

(74) Representative: **Intès, Didier Gérard André et al Cabinet Beau de Loménie**
**158, rue de l'Université**
**75340 Paris Cedex 07 (FR)**

(54) **CONTROL VALVE ABNORMALITY DETERMINATION DEVICE FOR INTERNAL COMBUSTION ENGINE**

(57)     The present invention provides with an apparatus for determining an abnormality of a control valve, the apparatus being applied to an internal combustion engine having: a plurality of superchargers 61, 62; and a plurality of control valves 64, 66, 68, and carries out an abnormality determination of at least one control valve among the plurality of control valves. The apparatus for determining an abnormality of a control valve determines, based on each opening degree of control valves belonging to a first control valve group including only a part of the plurality of control valves and at least one of: a pressure of the air in at least one location in the intake air passage; and a pressure of the exhaust gas in at least one location in the exhaust gas passage, whether or not a control valve belonging to a second control valve group that includes control valves except for control valves belonging to the first control valve group among the plurality of control valves is abnormal.

FIG. 6

EP 2 479 401 A1

**Description**

TECHNICAL FIELD

The present invention relates to an apparatus for determining an abnormality of a control valve, applied to an internal combustion engine having a plurality of superchargers and a plurality of control valves for controlling the plurality of superchargers.

BACKGROUND ART

A conventionally known supercharger (exhaust gas turbine type supercharger) comprises a turbine which is disposed in an exhaust gas passage of an internal combustion engine and is driven by energy of an exhaust gas, and a compressor which is disposed in an intake air passage of the engine and is driven by the driven turbine. Accordingly, an air introduced into the compressor is compressed by the compressor, and thereafter the air is discharged toward combustion chambers. That is, a supercharging is performed.

It is well known that the supercharger can substantially compress an air introduced into the compressor, when a flow rate of the air is within a range from a predetermined surge flow rate to a predetermined choked flow rate. Generally, both of the surge flow rate and the choked flow rate increase as a capacity of the supercharger becomes greater. Accordingly, when only one supercharger having a relatively small capacity is used to perform the supercharging, the amount of the air introduced into the compressor reaches the choked flow rate under a high load operating condition of the engine, and therefore the supercharging cannot be performed. On the other hand, when only one supercharger having a relatively large capacity is used to perform the supercharging, the amount of the air introduced into the compressor becomes smaller than the surge flow rate under a low load operating condition of the engine, and therefore the supercharging cannot be performed. It is therefore understood that an operating area (load area) in which an internal combustion engine having a single supercharger can be appropriately supercharged is narrow compared to a whole operating area of the engine.

In view of the above, one of conventional internal combustion engines comprises: a first supercharger having a small capacity; a second supercharger having a large capacity and being connected in series with the first supercharger; a plurality of bypass passages for adjusting an air flow rate or an exhaust gas flow rate supplied to the first supercharger and the second supercharger, and a plurality of control valves disposed in the bypass passages. In this internal combustion engine, both the first supercharger and the second supercharger are appropriately used depending on the operating condition of the engine. This allows the operating area (load area) in which the engine is appropriately supercharged to be expanded.

In the conventional internal combustion engine described above, for example, a control valve (exhaust gas changeover valve) is disposed in a bypass passage for adjusting an exhaust gas flow rate supplied to the turbine of the first supercharger. This exhaust gas changeover valve is controlled by a control apparatus so as to be closed when the load of the engine is low and so as to be opened when the load of the engine is high. This allows the first supercharger having the small capacity to operate mainly when the engine is operated under the low load condition. In the meantime, this allows the second supercharger having the large capacity to operate mainly when the engine is operated under the high load condition. As a result, the conventional engine described above can be appropriately supercharged in a greater operating area, compared to an area where the engine having a single supercharger can be appropriately supercharged.

The control apparatus which the conventional internal combustion engine comprises (hereinafter referred to as "conventional apparatus") determines whether or not the exhaust gas changeover valve operates properly/normally in order to retain a state where the engine is appropriately supercharged as described above. Specifically, the control apparatus stores/memorizes "a maximum value of the supercharging pressure when the exhaust gas changeover valve operates normally", the maximum value of the supercharging pressure being obtained by experiments performed in advance. Further, the control apparatus is configured in such a manner that it determines that the exhaust gas changeover valve is abnormal/anomalous when "an actual supercharging pressure" becomes larger than "the stored maximum value of the supercharging pressure" (see, for example, Japanese Utility Model Publication No. Hei 3-106133).

DISCLOSURE OF THE INVENTION

As described above, the conventional apparatus adopts "supercharging pressure" as a parameter (parameter for determining abnormality) to determine an abnormality of control valves. However, a magnitude of the supercharging pressure generally alters depending on not only a condition of one control valve (the exhaust gas changeover valve in the conventional apparatus described above) among a plurality of control valves, but also a condition of the other control valves. Furthermore, several parts for configuring the engine that includes these control valves have manufacturing variations (differences in size and precision between the same kind of parts, which potentially occur when these parts are manufactured. Herein after referred to as "individual difference"). Therefore, in order to carry out an abnormality determination of "a specific control valve" with a high degree of accuracy based on "a comparison between an obtained supercharging pressure and a predetermined threshold value" as the conventional apparatus, an effect of the individual difference(s) of other control valves on the supercharging pressure (that is, a range of variation of the supercharging pressure when each control valve is normal) needs to be also considered to determine the "threshold value". However, the conventional document does not disclose how the

Individual difference effects on the supercharging pressure. As a result thereof, the conventional apparatus may not carry out the abnormality determination of a control valve with a high degree of accuracy.

The present invention is made to solve the disadvantage described above. That is, one of objects of the present invention is to provide an apparatus for determining an abnormality of a control valve, which is applied to "an internal combustion engine having a plurality of superchargers and a plurality of control valves", and which can determine whether or not a control valve that has the individual difference operates normally.

The apparatus for determining an abnormality of a control valve is applied to an internal combustion engine that has a plurality of superchargers and a plurality of control valves.

Each of the plurality of superchargers comprises a "turbine" disposed in an exhaust gas passage of the engine and driven by energy of an exhaust gas flowing in the exhaust gas passage. The exhaust gas passage is a passage to exhaust an exhaust gas, which is discharged from a combustion chamber, from the combustion chamber to an outside of the engine. Furthermore, each of the plurality of superchargers comprises a "compressor" disposed in an intake air passage of the engine and driven by the driven turbine and then compresses an air in the intake air passage. The intake air passage is a passage to introduce an air of an outside of the engine from the outside to the combustion chamber. The plurality of compressors may be connected in series or in parallel. An air introduced from the outside of the engine to the combustion chamber is hereinafter referred to as "new air".

Each af the plurality of the control valves is configured to change "an amount of the air" or "a magnitude of the energy of the exhaust gas" depending on an opening degree thereof.

The apparatus for determining an abnormality of a control valve is applied to the internal combustion engine indicated above. The apparatus for determining an abnormality of a control valve comprises an opening degree obtaining means, a pressure obtaining means and an abnormality determining means.

The opening degree obtaining means is configured to obtain (that is, to actually detect, by an opening degree sensor, etc.) each opening degree of control valves belonging to a first control valve group including only a part of the plurality of control valves.

Here, "a part of the plurality of control valves" represents one or plural control valve among the plurality of control valves, not all of the plurality of control valves. An amount of the control valves belonging to the "first control valve group" and what control valve(s) among the plurality of control valves is configured to belong the first control valve group, etc., may be suitably determined by considering required accuracy of the determination for the apparatus for determining an abnormality of a control valve.

The pressure obtaining means is configured to obtain (that is, to actually detect, by an air pressure sensor, etc.) "a pressure for determination" that is at least one of "a pressure of the air in at least one location in the intake air passage" and "a pressure of the exhaust gas in at least one location in the exhaust gas passage".

The abnormality determining means is configured to determine whether or not at least one control valve among control valves belonging to "a second control valve group including control valves except for control valves belonging to the first control valve group among the plurality of control valves" is abnormal by using "at least one opening degree obtained by the opening degree obtaining means" and "the pressure for determination obtained by the pressure obtaining means".

As indicated above, when the opening degree of a control valve is changed, an amount of an air or a magnitude of the energy of the exhaust gas depending on an opening degree thereof. Therefore, when the opening degree of a control valve is changed, the pressure for determination is changed. In this way, an opening degree of a control valve and the pressure for determination are closely related each other. Accordingly, "the individual difference of a control valve (a variation of opening degree of the control valve due to the individual difference thereof)" has an effect on the pressure for determination.

The engine has a plurality of control valves, and the individual difference(s) of all of the control valves has an effect on the pressure for determination. However, the apparatus for determining an abnormality of a control valve of the present invention can obtain "an actual opening degree (that is, a determinate value that does not require considering the individual difference)" belonging to "the first control valve group". Therefore, the individual difference of a control valve belonging to the first control valve group is not need to be considered when an abnormality of the control valve is determined. In other words, when an abnormality of a control valve belonging to the second control valve group is determined, it is only required to consider an effect of the individual difference of a control valve belonging to the second control valve group on the pressure for determination. As a result thereof, the abnormality determination of a control valve belonging to the second control valve group can be carried out with a higher degree of accuracy for a degree correspond to the individual difference of a control valve belonging to the first control valve group, which is not need to be considered.

As described above, the apparatus for determining an abnormality of a control valve is applied to an internal combustion engine having a plurality of superchargers and a plurality of control valves, and which can determine whether or not the control valve(s) operates normally.

Furthermore, according to this configuration, an abnormality determination of a control valve belonging to the second control valve group can be carried out with a high degree of accuracy without obtaining an actual opening degree of the control valve belonging to the second control valve group, and therefore, an apparatus for determining an abnormality of a control valve can be configured with a lower cost compared with that of an apparatus for determining an abnormality of a control valve which is configured to obtain opening degrees of "all" of the control valves.

Furthermore, in a first embodiment of the apparatus for determining an abnormality of a control valve of the present invention, the abnormality determining means may be preferably configured so as to include:

"a first determining means" for determining whether or not at least one control valve among control valves belonging to the first control valve group is abnormal by "only an opening degree of the at least one control valve obtained by the opening degree obtaining means"; and

"a second determining means" for determining whether or not at least one control valve among control valves belonging to the second control valve group is abnormal by "at least one opening degree obtained by the opening degree obtaining means" and "the pressure for determination obtained by the pressure obtaining means", when the at least one control valve among control valves belonging to the first control valve group is determined not to abnormal.

As indicated above, an abnormality determination is carried out by using "at least one opening degree of control valves belonging to the first control valve group" and "the pressure for determination". Therefore, there is the possibility that the abnormality determination of a control valve belonging to the second controls valve group may not be carried out with a high degree of accuracy if the at least one of control valves belonging to the first control valve group is abnormal.

In the meantime, an abnormality determination of a control valve belonging to the first control valve group can be carried out by "an actual opening degree" obtained by the opening degree obtaining means. Therefore, the abnormality determination of a control valve belonging to the first control valve group can be carried out with a high degree of accuracy, regardless of a condition of a control valve belonging to the first control valve group.

Therefore, the apparatus for determining an abnormality of a control valve of the above embodiment carried out an abnormality determination of a control valve belonging to the second control valve group "after" a determination of "a control valve belonging to the first control valve group", which is used for the abnormality determination of the control valve belonging to the second control valve group, results in "not abnormal". As a result thereof, an accuracy of an abnormality determination of a control valve belonging to the second control valve group can be enhanced.

This first embodiment is configured in such a manner that "an abnormality determination of a control valve belonging to the first control valve group is carried out based on an opening degree obtained by the opening degree obtaining means, and an abnormality determination of a control valve belonging to the second control valve group is carried out based on an amount of change of an opening degree of a control valve belonging to the first control valve group when an opening degree belonging to the second control valve group is changed".

Specifically, the pressure obtaining means is configured so as to obtain, as the pressure for determination, "a supercharging pressure" brought by the plurality of the superchargers.

Furthermore, "the at least one control valve of which the first determining means determines the abnormality" is configured so as to change an opening degree thereof in response to a first instruction signal. This control valve is herein after referred to as "a first determining target control valve".

Additionally, "the at least one control valve of which the second determining means determines the abnormality" is configured so as to change an opening degree thereof in response to a second instruction signal. This control valve is hereinafter referred to as "a second determining target control valve".

Furthermore, the apparatus for determining an abnormality of a control valve of the present invention may further comprise:

"a first controlling means" for sending, when the engine is operated in a predetermined operating condition, the first instruction signal to the first determining target control valve so that "the supercharging pressure obtained by the pressure obtaining means becomes the same as a referential supercharging pressure determined based on the operating condition" and

"A second controlling means" for sending the second instruction signal to the second determining target control valve.

Accordingly, when the first determining target control valve is "normal", an opening degree of the first determining target control valve corresponds to "an opening degree determined by the first instruction signal". To the contrary, when the first determining target control valve is "abnormal", an opening degree of the first determining target control valve does not correspond to "an opening degree determined by the first instruction signal".

Therefore, the first determining means of the apparatus for determining an abnormality of a control valve of the present embodiment, firstly,

(A) determines that "the first determining target control valve is abnormal", if the absolute value of a first opening degree difference, which is a difference between "an actual opening degree of the first determining target control valve" obtained by the opening degree obtaining means and "an opening degree of the first determining target control valve determined by the first instruction signal", is equal to or more than a first opening degree.

Furthermore, the second determining means of the apparatus for determining an abnormality of a control valve of the present embodiment makes a determination in such a manner that

(B) when the first determining target control valve is determined "not to be abnormal" (in other words, the first determining target control valve is in a condition that the first determining target control valve can operate in accordance with the first instruction signal.),

(B-1) the second determining means obtains the opening degree of the first determining target control valve as "a first value"; and

(B-2) provides the second controlling means with an instruction so as to send", as the second instruction signal, an first opening degree changing instruction signal that is to change the opening degree of the second determining target control valve in order to determine whether or not the second determining target control valve is abnormal", from the second controlling means to the second determining target control valve, at a first time point equal to or after a time point at which the first value is obtained; and

(B-3) obtains an opening degree of the first determining target control valve as "a second value" at a second time point that is after a lapse of a first time period from the first time point; and

(B-4) if the absolute value of "an opening degree changing amount, which is a difference between the second value and the first value", is smaller than a predetermined first threshold changing amount, the second determining means determines that "the second determining target control valve is abnormal".

As indicated above, an opening degree of the first determining target control valve, which is normal, is changed so that an actual supercharging pressure becomes the same as the referential supercharging pressure, when the engine is operated in a predetermined operating condition. Therefore, when an opening degree of the second determining target control valve is changed, an opening degree of the first determining target control valve is changed so as to eliminate (that is, so that a supercharging pressure obtained by the pressure obtaining means continues to be the same as the referential supercharging pressure) the change of a supercharging pressure that is associated with the change of the opening degree of the second determining target control valve. In other words, the change of the opening degree of "the second determining target control valve" brings the change of the supercharging pressure, and the change of the supercharging pressure causes the change of the opening degree of "the first determining target control valve".

Therefore, if the second determining target control valve is "not abnormal", an "actual opening degree" of the second determining target control valve is changed from the first opening degree to the second opening degree when the first instruction signal for changing the opening degree is sent from the second controlling means to the second determining target control valve, and therefore, an opening degree of the first determining target control valve is changed.

Accordingly, if the opening degree of "the first determining target control valve" is changed by an amount equal to or more than a predetermined value (the first threshold changing amount) when the first instruction signal for changing the opening degree is sent from the second controlling means to the second determining target control valve, the second determining target control valve can be determined to be "normal". On the other hand, if the opening degree of "the first determining target control valve" is not changed by an amount equal to or more than the predetermined value (the first threshold changing amount) when the signal is sent, the second determining target control valve can be determined to be "abnormal". As indicated above, the abnormality determination of the second determining target control valve is carried out by using an actual opening degree of the first determining target control valve which is determined not to be abnormal and an actual supercharging pressure obtained by the pressure obtaining means, in this embodiment.

In addition, the above "referential supercharging pressure" can be determined by, for example, determining "a relationship between a predetermined operating parameter and supercharging pressure" by experiments performed in advance, and applying "an actual operating parameter" obtained when the engine is being operated to the relationship. This referential supercharging pressure can be referred to as a target supercharging pressure that is required for the engine. The above "first threshold changing amount" is preferably set to a value that can be an index when it is determined whether or not the second determining target control valve is normal as well as a value corresponding to "the minimum value of the difference (opening degree changing amount) between the first value and the second value" that is obtained when the second determining target control valve is "normal",

Furthermore, according to this embodiment, a supercharging pressure is continues to be the same as the referential supercharging pressure during the determination whether or not the second determining target control valve normally operates. Therefore, an abnormality determination of a control valve can be carried out while keeping a reasonable drivability since no acceleration/deceleration causes regardless of operation by an operator of the engine.

Additionally, in the apparatus disclosed in Japanese Utility Model Publication No. Hei 3-106133 indicated above, even if a control valve (the exhaust gas changeover valve) is abnormal, this abnormality cannot be found until an actual supercharging pressure becomes larger than the predetermined maximum value of supercharging pressure when the engine is driven in a high load driving area. On the other hand, an apparatus for determining an abnormality of a control valve of this embodiment can carry out the abnormality determination of control valve even when the engine is not driven in a high load driving area. Accordingly, an abnormality of control valve can be found in an early stage.

Furthermore, the second determining means in the first embodiment may be configured so as to:

determine, as a "preliminary determination", that the second determining target control valve is abnormal if the absolute value of the opening degree changing amount is smaller than the first threshold changing amount; and then determine that "the second determining target control valve is abnormal" if an amount of times of the preliminary determination made in "a time period from start to stop of the engine" is equal to or more than a first threshold amount of times.

A determination accuracy of the abnormality determination of the second determining target control valve can be further enhanced by determining that the second determining target control valve is abnormal "when the preliminary determination is made equal to or more than a predetermined number of times (the first threshold amount of times) in the time period from start to stop of the engine", as described above.

Furthermore, in a second embodiment of the apparatus for determining an abnormality of a control valve of the present invention,

The abnormality determining means may be configured so as to further comprise "a third determining means" for determining, when the at least one control valve among control valves belonging to the first control valve group is determined "not to be abnormal", whether or not at least one control valve among control valves belonging to the second control valve group is abnormal by "only" the pressure for determination obtained by the pressure obtaining means.

This second embodiment may be configured so as to "carry out the abnormality determination of a control valve among control valves belonging to the first control valve group based on an opening degree obtained by the opening degree obtaining means, and carry out the abnormality determination of a control valve belonging to the second control valve group based on a changing amount of supercharging pressure".

Specifically, the pressure obtaining means may be configured so as to obtain, as the pressure for determination, "a supercharging pressure" brought by the plurality of the superchargers, which is the same as the above first embodiment.

Furthermore, "the at least one control valve of which the first determining means determines the abnormality" may be configured so as to change an opening degree thereof in response to a third instruction signal. This control valve is referred to as "a third determining target control valve".

Additionally, "the at least one control valve of which the third determining means determines the abnormality" may be configured so as to change an opening degree thereof in response to a fourth instruction signal. This control value is referred to as "a fourth determining target control valve".

Here, the above "third determining target control valve" may be the same control valve or a different control valve as "the first determining target control valve" in the above first embodiment. Furthermore, the above "fourth determining target control valve" may be the same control valve or a different control valve as "the second determining target control valve" in the above first embodiment.

Furthermore, the apparatus for determining an abnormality of a control valve of this embodiment may further comprise:

"a third controlling means" for sending the third instruction signal to the third determining target control valve; and
"a fourth controlling means" for sending the fourth instruction signal to the fourth determining target control valve.

Accordingly, when the third determining target control valve is "normal", an opening degree of the third determining target control valve becomes the same as "an opening degree determined by the third instruction signal". On the other hand, when the third determining target control valve is "abnormal", an opening degree of the third determining target control valve does not become the same as "the opening degree determined by the third instruction signal".

Consequently, the first determining means of the apparatus for determining an abnormality of a control valve of this embodiment may be configured so as to:

(C) determine that "the third determining target control valve is abnormal" if the absolute value of a second opening degree difference, which is a difference between "an actual opening degree of the third determining target control valve" obtained by the opening degree obtaining means and "an opening degree of the third determining target control valve determined by the third instruction signal", is equal to or more than a second opening degree.

Furthermore, the third determining means of the apparatus for determining an abnormality of a control valve of this embodiment may be configured in such a manner that:

(D) when the third determining target control valve is determined " not to be abnormal" (in other words, the third determining target control valve is in a condition that the third determining target control valve can operate in accordance with the third instruction signal),

(D-1) the second determining means obtains the supercharging pressure as "a third value"; and

(D-2) provides the fourth controlling means with an instruction so as to send, as the fourth instruction signal, "a second opening degree changing instruction signal that is to change the opening degree of the fourth determining target control valve in order to determine whether or not the fourth determining target control valve is abnormal", from the fourth controlling means to the fourth determining target control valve, at a third time point equal to or after a time point at which the third value is obtained; and

(D-3) obtains the supercharging pressure as "a fourth value" at a fourth time point that is after a lapse of a second time period from the third time point; and

(D-4) if the absolute value of "an supercharging pressure changing amount, which is a difference between the fourth value and the third value, is smaller than a predetermined second threshold changing amount, the third determining means determines that "the fourth determining target control valve is abnormal".

As described above, an opening degree of the fourth determining target control valve changes in response to the fourth instruction signal sent from the fourth controlling means. Furthermore, when the opening degree of the fourth determining target control valve is changed, a supercharging pressure is changed in response to the change of the opening degree. Therefore, if the fourth determining target control valve is "normal", "an actual opening degree" of the fourth determining target control valve is changed from a third opening degree to a fourth opening degree when the second instruction signal for changing the opening degree is sent from the fourth controlling means to the fourth determining target control valve, and therefore, a supercharging pressure is changed.

Therefore, if the "supercharging pressure" is changed by an amount equal to or more than a predetermined value (the second threshold changing amount) when the second instruction signal for changing the opening degree is sent from the fourth controlling means to the fourth determining target control valve, the fourth determining target control valve can be determined to be "normal". On the other hand, if the "supercharging pressure" is not changed by an amount equal to or more than the predetermined value (the second threshold changing amount) when the signal is sent, the fourth determining target control valve can be determined to be "abnormal".

In addition, the above "second threshold changing amount" is preferably set to a value that can be an index when it is determined whether or not the fourth determining target control valve is normal as well as a value corresponding to "the minimum value of the difference (supercharging pressure changing amount) between the third value and the fourth value" that is obtained when the fourth determining target control valve is "normal".

Furthermore, the third determining means in the second embodiment, may be configured so as to determines, as "a preliminary determination", that the fourth determining target control valve is abnormal if the absolute value of the supercharging pressure changing amount is smaller than the second threshold changing amount; and then determine that "the fourth determining target control valve is abnormal" if an amount of times of the preliminary determination made in "a time period from start to stop of the engine" is equal to or more than a second threshold amount of times, the third determining means.

A determination accuracy of the abnormality determination of the fourth determining target control valve can be further enhanced by determining that the fourth determining target control valve is abnormal "when the preliminary determination is made equal to or more than a predetermined number of times (the second threshold amount of times) in the time period from start to stop of the engine", as described above.

On the other hand, in the above "second embodiment", a supercharging pressure is changed when an opening degree of the fourth determining target control valve, and then, there is a possibility of changing torque, which is not intended by an operator of the engine, when the abnormality determination of the fourth determining target control valve is carried out.

Therefore, the third determining means of the above second embodiment is preferably configured so as to provides the fourth controlling means with an instruction to send the second opening degree changing instruction signal from the fourth controlling means to the fourth determining target control valve when the engine is operated under "a decelerate condition on which at least a required torque for the engine is equal to or smaller than a predetermined threshold torque".

Even if an opening degree of the fourth determining target control valve is changed when the engine is driven under the "decelerate condition", there is a possibility of changing an output torque of the engine. However, that change of torque is less recognizable by the operator as "an unintentional change of torque". Therefore, an abnormality determination of the fourth determining target control valve can be carried out while keeping a reasonable drivability by configuring the apparatus for determining an abnormality of a control valve so as to fulfill the second abnormality determination condition under the decelerate condition.

On the other hand, the apparatus for determining an abnormality of a control valve of the present invention may be configured so as to determine an abnormality of a control valve on the assumption that "there is no chance that two or more control valves among the plurality of control valves become abnormal at the same time". Actually, it is rare that two or more control valves among the plurality of control valves become abnormal at the same time, and therefore, the above is a realistic assumption. This assumption is hereinafter referred to as "assumption for excepting multiple abnormalities". According to this assumption for excepting multiple abnormalities, when it is determined that "one control valve among the plurality of control valves is abnormal", it may be assumed that "the other control valves that is different from the one control valve is normal."

Therefore, in the apparatus for determining an abnormality of a control valve of the present invention, the abnormality determining means may be configured:

so as to assume, when "one control valve among the plurality of control valves is determined to be abnormal", that "the other control valves other than the one control valve among the plurality of control valves" are normal.

Furthermore, in the apparatus for determining an abnormality of a control valve of the present invention, one or more control valves belonging to "the first control valve group" is a "butterfly valve".

Butterfly valve is, as is well known, a type of valve that has a rotatable valving element around a predetermined axis line and that can change a flow rate of a fluid that passes through a location where the valving element is installed by rotating the valving element around the axis line. As an embodiment of the butterfly valve, an adoptable control valve as an example therefor is a control valve having a valving element that is rotatable around a rotating axis line perpendicular to an axis line of a tube, which defines a passage for a fluid (air or gas, in this embodiment), and that has a plate-like shape and that is supported by the tube with a pair of rotation shafts which are formed on the rotating axis line so as to each protrude toward outside direction. This butterfly valve can change flow passage area by rotating the valving element around the rotating axis line (that is, by changing an opening degree thereof), and as a result thereof, can change a flow rate of the fluid.

The butterfly valve has a characteristic, because of its structure, that an opening degree thereof is hard to exactly correspond to an instruction signal. On the other hand, the butterfly valve is a preferable valve as a valve for controlling flow rate. Therefore, an abnormality determination of a butterfly valve can be carried out without considering any effect of a variation of opening degree due to the individual difference of the butterfly valve on supercharging pressure etc., by including butterfly valve(s) into the first control valve group and obtaining opening degree(s) of the butterfly valve(s) with the opening degree obtaining means.

Furthermore, in the apparatus for determining an abnormality of a control valve of the present invention,

It is preferable that "only one" control valve belongs to the first control valve group.

As indicated above, an opening degree of a control valve belonging to the first control valve group is obtained by the opening degree obtaining means. Accordingly, the more control valve belongs to the first control valve group, the more control valve can be subject to the abnormality determination with a high degree of accuracy without considering the individual difference of the control valve. Furthermore, the accuracy of the abnormality determination of a control valve belonging to the second control valve group is also enhanced. On the other hand, the more control valve belongs to the first control valve group, the more cost for producing the apparatus for determining an abnormality of a control valve may be required since the more opening degree of control valve is obtained by the opening degree obtaining means. Therefore, "only one control valve" is included into the first control valve group, and thereby, the accuracy of the abnormality determination of control valve is enhanced compared with that when no control valve's opening degree is obtained by the opening degree obtaining means (that is, there is no control valve that belongs to the first control valve group), as well as the cost for producing the apparatus for determining an abnormality of a control valve can be decreased as much as possible.

Furthermore, in the apparatus for determining an abnormality of a control valve of the present invention,

It is preferable that one or more control valves belonging to the first control valve group is disposed in the exhaust gas passage.

The exhaust gas that passes through the exhaust gas passage is a high-temperature fluid that includes some content such as unburned combustible contents (CO, HC, etc.) and soot. Therefore, a control valve that is disposed in the exhaust gas passage has larger possibility of adhesive fixing and heat deformation of the control valve compared with a control valve that is disposed in the intake air passage. Accordingly, it is preferable that the determination of a control valve disposed in the exhaust gas passage is carried out with especially high degree of accuracy.

Therefore, "a control valve disposed in the exhaust gas passage" is included into the first control valve group, and thereby, the accuracy of the abnormality determination of the control valve is enhanced compared with that when the control valve is included into the second control valve group.

BRIEF DESCRIPTION OF THE DRAWINGS

FIG. 1 is a schematic diagram of an internal combustion engine to which an apparatus for determining an abnormality of a control valve of the present invention is applied;
FIG. 2 is a schematic diagram of a control valve (butterfly valve) applied to the engine according to FIG. 1.
FIG. 3 is a schematic figure showing a relation among an engine rotational speed, a fuel injection amount, and a turbo mode, adopted by the apparatus for determining an abnormality of a control valve of the present invention;
FIG. 4 is a schematic diagram showing first example of an intake air passage and an exhaust gas passage of an internal combustion engine to which an apparatus for determining an abnormality of a control valve according to the first embodiment of the present invention is applied;
FIG. 5 is a schematic diagram showing second example of an intake air passage and an exhaust gas passage of an internal combustion engine to which an apparatus for determining an abnormality of a control valve according to the first embodiment of the present invention is applied;
FIG. 6 is a flowchart showing a routine executed by a CPU of the apparatus for determining an abnormality of a control valve according to the first embodiment of the present invention;
FIG. 7 is a flowchart showing a routine executed by a CPU of the apparatus for determining an abnormality of a control valve according to the first embodiment of the present invention;
FIG. 8 is a flowchart showing a routine executed by a CPU of the apparatus for determining an abnormality of a control valve according to the first embodiment of the present invention;
FIG. 9 is a schematic diagram showing first example of an intake air passage and an exhaust gas passage of an internal combustion engine to which an apparatus for determining an abnormality of a control valve according to the second embodiment of the present invention is applied;
FIG. 10 is a schematic diagram showing second example of an intake air passage and an exhaust gas passage of an internal combustion engine to which an apparatus for determining an abnormality of a control valve according to the second embodiment of the present invention is applied;
FIG. 11 is a flowchart showing a routine executed by a CPU of the apparatus for determining an abnormality of a control valve according to the second embodiment of the present invention;
FIG. 12 is a flowchart showing a routine executed by a CPU of the apparatus for determining an abnormality of a control valve according to the second embodiment of the present invention.

BEST MODE FOR CARRYING OUT THE INVENTION

Next will be described embodiments of an apparatus for determining an abnormality of a control valve according to the present invention with reference to the drawings.

(First Embodiment)

<Outline of Apparatus>

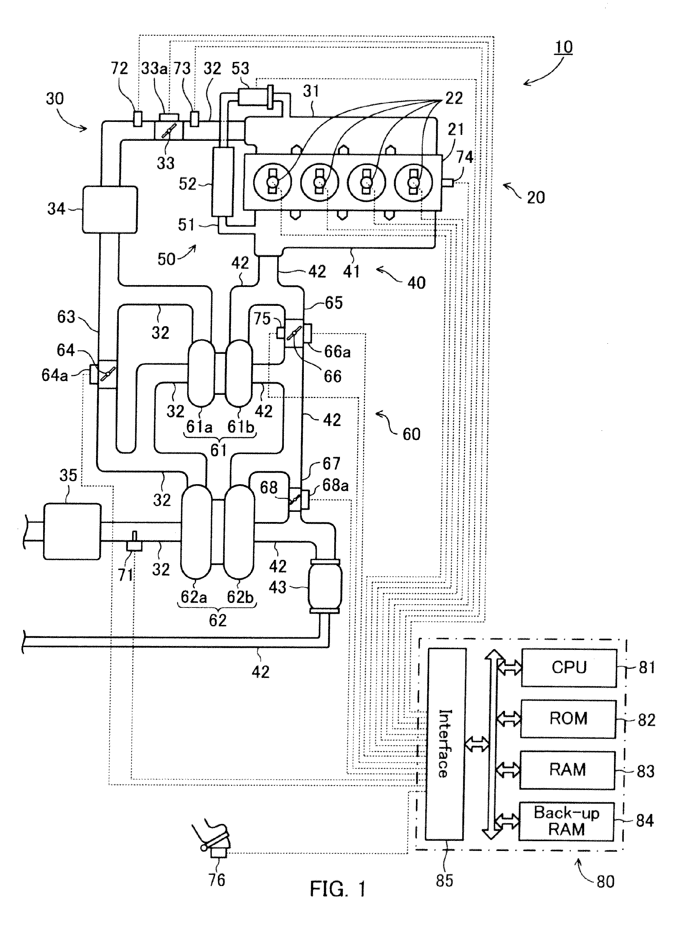

FIG. 1 shows a schematic configuration of a system including an internal combustion engine 10 to which an apparatus for determining an abnormality of a control valve (hereinafter referred to as "a first apparatus") according to a first embodiment of the present invention is applied. The engine 10 is a four cylinder diesel engine.
The engine 10 comprises: an engine main body 20 including a fuel supply system; an intake system 30 for introducing an air into the engine main body 20; an exhaust system 40 for emitting an exhaust gas from the engine main body 20 to the outside; an EGR apparatus 50 for recirculating the exhaust gas to a side of the intake system 30; and supercharging apparatus 60 for compressing an air introduced into the engine main body 20 by being driven by an energy of the exhaust gas.
The engine main body 20 comprises a cylinder head 21 with which the intake system 30 and the exhaust system 40 are connected. The cylinder head 21 comprises a plurality of fuel injection devices 22, each of which is disposed at an upper portion of a corresponding cylinder. Each of the fuel injection devices 22 is communicated with a fuel tank (not shown) so as to inject a fuel directly into a combustion chamber of each of the cylinders in response to an instruction signal from an electrical control apparatus 80.
The intake system 30 includes: an intake manifold 31 communicated with each of the cylinders through intake ports (not shown) provided in the cylinder head 21; an intake pipe 32 connected to an upstream merged portion of the intake manifold 31; a throttle valve 33, in the intake pipe 32, for varying a cross-sectional opening area of an intake air passage; a throttle valve actuator 33a for rotatably driving the throttle valve 33 in response to an instruction signal from the electrical control apparatus 80; an intercooler 34 disposed in the intake pipe 32 at an upstream side of the throttle valve 33; and an air cleaner 35 disposed at an end potion of the intake pipe 32 which is an upstream side of the supercharging apparatus 60 disposed at an upstream side of the intercooler 34. The intake manifold 31 and the intake pipe 32 constitute the intake air passage.
The exhaust system 40 comprises: an exhaust manifold 41 communicated with each of the cylinders through exhaust ports (not shown) provided in the cylinder head 21; an exhaust pipe 42 connected to a downstream merged portion of the exhaust manifold 41; and a well-known catalytic converter for purifying the exhaust gas (DPNR) 43 disposed in the exhaust pipe 42 at a downstream side of the supercharging apparatus 60 disposed in the exhaust pipe 42. The exhaust manifold 41 and the exhaust pipe 42 constitute an exhaust gas passage.

The EGR apparatus 50 comprises: an exhaust gas recirculation pipe 51 constituting a passage (an EGR passage) for recirculating the exhaust gas from the exhaust manifold 41 to the intake manifold 31; an EGR gas cooling apparatus (an EGR cooler) 52 disposed in the exhaust gas recirculation pipe 51; and an EGR control valve 53 disposed in the exhaust gas recirculation pipe 51. The EGR control valve 53 is configured so as to be able to vary an amount of the exhaust gas which is recirculated from the exhaust manifold 41 to the intake manifold 31 in response to an instruction signal from the electrical control apparatus 80.

The supercharging apparatus 60 comprises: a high pressure supercharger (turbocharger) 61 serving as a first supercharger; and a low pressure supercharger (turbocharger) 62 serving as a second supercharger. That is, the supercharging apparatus 60 comprises a plurality (two) of superchargers.

The high pressure supercharger 61 comprises a high pressure compressor 61 a and a high pressure turbine 61 b. The high pressure compressor 61a is disposed in the intake air passage (intake pipe 32). The high pressure turbine 61 b is disposed in the exhaust gas passage (exhaust pipe 42). The high pressure compressor 61 a and the high pressure turbine 61b are connected with each other coaxially rotatably through a rotor shaft (not shown). Accordingly, when the high pressure turbine 61b is driven by the exhaust gas, the high pressure compressor 61a rotates to compress (i.e., supercharge) an air introduced into the high pressure compressor 61 a.

The low pressure supercharger 62 comprises a low pressure compressor 62a and a low pressure turbine 62b. The low pressure compressor 62a is disposed in the intake air passage (intake pipe 32) at an upstream side of the high pressure compressor 61a. The low pressure turbine 62b is disposed in the exhaust gas passage (exhaust pipe 42) at a downstream side of the high pressure turbine 61 b. The low pressure compressor 62a and the low pressure turbine 62b are connected with each other coaxially rotatably through a rotor shaft (not shown). Accordingly, when the low pressure turbine 62b is driven by the exhaust gas, the low pressure compressor 62a rotates to compress (i.e., supercharge) an air introduced into the low pressure compressor 62a.

In this manner, the high pressure supercharger 61 and the low pressure supercharger 62 are connected in series with each other. Furthermore, a capacity of the low pressure supercharger 62 is larger than a capacity of the high pressure supercharger 61. Accordingly, a choked flow rate of the low pressure supercharger 62 is larger than a choked flow rate of the high pressure supercharger 61, and a surge flow rate of the low pressure supercharger 62 is larger than a surge flow rate of the high pressure supercharger 61. In other words, a minimum magnitude of energy required for supercharging the engine by the high pressure supercharger 61 is smaller than a minimum magnitude of energy required for supercharging the engine by the low pressure supercharger 62.

Consequently, the supercharging apparatus 60 can supercharge the engine mainly by the high pressure supercharger 61 in a low load operating area, and supercharge the engine mainly by the low pressure supercharger 62 in a high load operating area. Accordingly, a new air is appropriately compressed (supercharged) in a wider operating area (load area) by the high pressure supercharger 61 and the low pressure supercharger 62.

Further, the supercharging apparatus 60 comprises: a high pressure compressor-bypass passage section (bypass pipe) 63, an intake air changeover valve (ACV) 64; a high pressure turbine-bypass passage section (bypass pipe) 65; an exhaust gas changeover valve (ECV) 66; a low pressure turbine-bypass passage section (bypass pipe) 67; and an exhaust gas bypass valve (EBV) 68.

One end of the high pressure compressor-bypass passage section 63 is connected to the intake air passage (intake pipe 32) between the high pressure compressor 61 a and the low pressure compressor 62a. The other end of the high pressure compressor-bypass passage section 63 is connected to the intake air passage (intake pipe 32) at a downstream side of the high pressure compressor 61 a. That is, the high pressure compressor-bypass passage section 63 constitutes a passage which bypasses the high pressure compressor 61 a.

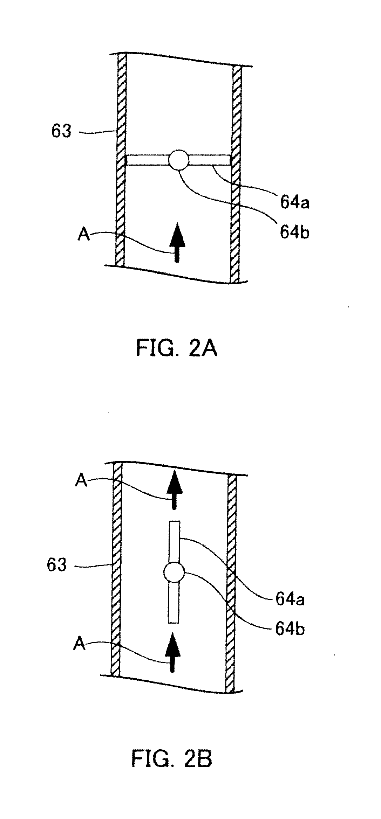

The intake air changeover valve 64 is a butterfly valve disposed in the high pressure compressor-bypass passage section 63. The intake air changeover valve 64 has a plate-shape valving element 64a and a rotation shaft 64b as shown in FIG. 2. The valving element 64a has a shape in front view that is approximately the same shape of an inner periphery of the high pressure compressor-bypass passage section 63 shown in a cross-section of the high pressure compressor-bypass passage section 63 when the high pressure compressor-bypass passage section 63 is cut by a plane surface that is perpendicular to the axis line. The rotation shaft 64b is a cylinder-shape member and integrally formed with the valving element 64a so as to pass through the central portion and both edge portion of a radial direction of the valving element 64a. The valving element 64a is supported by the high pressure compressor-bypass passage section 63 with the rotation shaft 64b so as to be rotatable around a rotation axis line (around the rotation shaft 64b) that is perpendicular to the axis line of the high pressure compressor-bypass passage section 63 in a range from a rotation position shown in FIG. 2A (fully close position) to a rotation position shown in FIG. 2B (fully open position). Here, the rotation shaft 64b is rotated by the intake air changeover valve actuator 64a that is driven in response to an instruction from the electric control apparatus 80.

When the valving element 64a is at the rotation position (fully close position) shown in FIG. 2(A), an air A cannot pass through the high pressure compressor-bypass passage section 63. On the other hand, when the valving element 64a is at the rotation position (fully open position) shown in FIG. 2(B), an air A can pass through the high pressure compressor-bypass passage section 63 without a substantial effect of the valving element 64a. That is, when the rotation position (opening degree) of the intake air changeover valve 64 is changed, the flow rate of the air A that pass through the high pressure compressor-bypass passage section 63 is changed. Here, refereeing to FIG. 1, as is clear from the configuration of the internal combustion engine 1 to, when the flow rate of the air A that pass through the high pressure compressor-bypass passage section 63 is changed, the amount of the air A that is introduced to the high pressure turbine 61 b is also changed. For example, when the flow rate of the air A that pass through the high pressure compressor-bypass passage section 63 is increased, the amount of the air A that is introduced to the high pressure turbine 61 b is decreased.

As described above; the intake air changeover valve (butterfly valve) 64 is configured in such a manner that a rotation position (opening degree) of the valve 64 is changed in response to an instruction from the electric control apparatus 80, and thereby, a ratio between an amount of the air introduced into the high pressure compressor 61 a and an amount of the air passing through the high pressure compressor-bypass passage section 63 in response to the rotation position (opening degree) thereof.

One end of the high pressure turbine-bypass passage section 65 is connected to the exhaust gas passage (exhaust pipe 42) at an upstream side of the high pressure turbine 61b. The other end of the high pressure turbine-bypass passage section 65 is connected to the exhaust gas passage (exhaust pipe 42) between the high pressure turbine 61 b and the low pressure turbine 62b. That is, the high pressure turbine-bypass passage section 65 constitutes a passage which bypasses the high pressure turbine 61 b.

The exhaust gas changeover valve 66 is a butterfly valve disposed in the high pressure turbine-bypass passage section 65. The exhaust gas changeover valve 66 has the same configuration as that of the intake air changeover valve 64. That is, the exhaust gas changeover valve 66 is configured in such a manner that an opening degree (operating amount) of the valve 66 is varied by an exhaust gas changeover valve actuator 66a which is driven in response to an instruction from the electric control apparatus 80. The exhaust gas changeover valve 66 changes a flow passage area of the high pressure turbine-bypass passage section 65 in accordance with a change in the opening degree, and thereby, change a ratio between an amount of the gas introduced into the high pressure turbine 61 b and an amount of the gas passing through the high pressure turbine-bypass passage section 65.

One end of the low pressure turbine-bypass passage section 67 is connected to the exhaust gas passage (exhaust pipe 42) at an upstream side of the low pressure turbine 62b as well as between the high pressure turbine 61 b and the low pressure turbine 62b, The other end of the low pressure turbine-bypass passage section 67 is connected to the exhaust gas passage (exhaust pipe 42) at a downstream side of the low pressure turbine 62b. That is, the low pressure turbine-bypass passage section 67 constitutes a passage which bypasses the low pressure turbine 62b.

The exhaust gas bypass valve 68 is a butterfly valve disposed in the low pressure turbine-bypass passage section 67. The exhaust gas bypass valve 68 has the same configuration as that of the intake air changeover valve 64. That is, the exhaust gas bypass valve 68 is configured in such a manner that an opening degree of the valve 68 is varied by an exhaust gas bypass valve actuator 68a which is driven in response to an instruction from the electric control apparatus 80. The exhaust gas bypass valve 68 changes a flow passage area of the low pressure turbine-bypass passage section 67 in accordance with a change in the opening degree, and thereby, change a ratio between an amount of the gas introduced into the low pressure turbine 62b and an amount of the gas passing through the low pressure turbine-bypass passage section 67.

Further, the first apparatus comprises a hot wire airflow meter 71, an intake air temperature sensor 72, a supercharging pressure sensor 73, a crank position sensor 74, an exhaust gas changeover valve opening degree sensor 75, and an accelerator opening degree sensor 76.

The airflow meter 71 is configured so as to output a signal indicative of a mass flow rate Ga of the intake air flowing in the intake pipe 32 (the mass flow rate Ga being an amount of an air introduced into the engine 10 per unit time and referred simply to as "a flow rate").

The intake air temperature sensor 72 is configured so as to output a signal indicative of a temperature of the air flowing in the intake pipe 32.

The supercharging pressure sensor 73 is disposed in the intake pipe 32 at a downstream side of the throttle valve. The supercharging pressure sensor 73 is configured so as to output a signal indicative of a pressure Pim of an air in the intake pipe 32 at a position at which the supercharging pressure sensor 73 is disposed. That is, the supercharging pressure sensor 73 outputs a signal indicative of the pressure (supercharging pressure) Pim of the air introduced into combustion chambers of the engine 10.

The crank position sensor 74 is configured so as to output a signal which includes a narrow pulse generated every time a crank shaft (not shown) rotates 10° and a wide pulse generated every time the crank shaft rotates 360°.

The exhaust gas changeover valve opening degree sensor 75 is configured so as to output a signal indicative of an opening degree Oecv of the exhaust gas changeover valve 66.

The accelerator opening degree sensor 76 is configured so as to output a signal indicative of an opening degree Accp of an accelerator pedal AP operated by a driver.

As described above, in the first apparatus, an opening degree of one control valve (the exhaust gas changeover valve 66) among a plurality of control valves (the intake air changeover valve 64, the exhaust gas changeover valve 66 and the exhaust gas bypass valve 68) is obtained by the exhaust gas changeover valve opening degree sensor 75. The exhaust gas changeover valve 66 is referred to as a "control valve belonging to first control valve group", for convenience. Here, the first control valve group represents a group of control valves to which sensor(s) (the exhaust gas changeover valve opening degree sensor 75) that can obtain opening degree(s) of the control valve(s) is applied. Also, the intake air changeover valve 64 and the exhaust gas bypass valve 68 is referred to as "control valve belonging to second control valve group", for convenience. Here, the second control valve group represents a group of control valves except for the control valve(s) belonging to the first control valve group (that is, control valves to which sensor(s) that can obtain opening degree(s) of the control valve(s) is not applied).

The electric control apparatus 80 is a microcomputer, which includes the following mutually bus-connected elements: a CPU 81; a ROM 82; a RAM 83; a backup RAM 84 which stores data while power is held on and which retains the stored data even while power is held off; and an interface 85 including an AD converter.

The interface 85 is connected to the sensors etc., so as to send signals from each of the sensors to the CPU 81. Further, in accordance with instructions from the CPU 81, the interface 85 sends drive signals (instruction signals) to the fuel injection devices 22, and each of the actuators (the intake air changeover valve actuator 64a, the exhaust gas changeover valve actuator 66a, and the exhaust gas bypass valve actuator 68a, and the like).

<Outline of Operations of the Apparatus>

Next will be described the outline of operations of the first apparatus that is configured as above.

The first apparatus determines "a turbo mode" which represents an operating state of the supercharging apparatus 60 (the high pressure supercharger 61 and the low pressure supercharger 62) depending on an operating condition/state of the engine 10. Further, the first apparatus determines whether or not the exhaust gas changeover valve 66 normally operates by comparing:

an opening degree of the exhaust gas changeover valve 66 that is obtained based on an output value of the exhaust gas changeover valve opening degree sensor 75 (hereinafter referred to as an "actual opening degree Oecv"); and an opening degree of the exhaust gas changeover valve 66 that is defined by an instruction signal sent from the electric control apparatus 80 to the exhaust gas changeover valve actuator 66a (hereinafter referred to as a "target opening degree Oecvtgt"),

Furthermore, the first apparatus sends an instruction signal for forcibly changing the opening degree Oebv of the exhaust gas bypass valve 68 from the electric control apparatus 80 to the exhaust gas bypass valve 68 (actually, to the exhaust gas bypass valve actuator 68a), when the first apparatus determines that the exhaust gas changeover valve 66 "normally" operates and the abnormality determining condition, which includes whether or not the supercharging apparatus 60 operates under a predetermined turbo mode (a turbo mode under which the "supercharging pressure feedback control" is carried out), is satisfied. Then, the first apparatus compares an opening degree Oecv1 at a timing "before" the instruction signal is sent to the exhaust gas bypass valve 68 with an opening degree Oecv2 at a timing "after" the instruction signal is sent to the exhaust gas bypass valve 68, and thereby, determines whether or not the exhaust gas bypass valve 68 normally operates.

Furthermore, when at least one of the exhaust gas changeover valve 66 and the exhaust gas bypass valve 68 is abnormal, the first apparatus notifies the operator of the engine 10 accordingly, and performs "an emergency operation" in which a load given to the members constituting the engine 10 is low. In the meanwhile, when the exhaust gas changeover valve 66 and the exhaust gas bypass valve 68 are normal, the first apparatus provides no notification to the operator and performs "a normal operation". These are the outline of the operations of the first apparatus.

<How to determine the turbo mode>

Next will be described the turbo mode which the first apparatus adopts and the way to determine the turbo mode, before actual operations of the present invention are described.

As described above, an amount of energy of the exhaust gas which allows the high pressure superchargers 61 to operate is smaller than an amount of energy of the exhaust gas which allows the low pressure supercharger 62 to operate. Therefore, the first apparatus controls the exhaust gas changeover valve 66 in such a manner that the exhaust gas is preferentially supplied to the high pressure supercharger 61, when the energy of the exhaust gas is small (i.e., when the load of the engine is small and the flow rate Ga is small). To the contrary, the first apparatus controls the exhaust gas changeover valve 66 in such a manner that the exhaust gas is preferentially supplied to the low pressure supercharger 62, when the energy of the exhaust gas is large (i.e., when the load of the engine is large and the flow rate Ga is large). Furthermore, the first apparatus controls the exhaust gas bypass valve 68 in such a manner that an excessive energy of the exhaust gas is not supplied to the low pressure supercharger 62. In addition, the first apparatus controls the intake air changeover valve 64 in such a manner that an appropriate amount of the air is supplied to the high pressure supercharger 61.

That is, the first apparatus controls the intake air changeover valve 64, the exhaust gas changeover valve 66, and the exhaust gas bypass valve 68 in such a manner that the an appropriate amount of the air and an appropriate amount of the exhaust gas are supplied to the high pressure supercharger 61 and the low pressure supercharger 62 in accordance with the operating condition of the engine 10. Thereby, the high pressure supercharger 61 and the low pressure supercharger 62 are appropriately driven in accordance with the operating condition. As a result thereof, supercharging of the engine is appropriately carried out.

In order to perform such a control, the first apparatus divides operating conditions of the engine 10 into four areas (operating areas), and determines operating states of the intake air changeover valve 64, the exhaust gas changeover valve 66, and the exhaust gas bypass valve 68 (hereinafter referred to as "each control valve"), the operating states being suitable for each of the four operating areas. "The operating state of each control valve" is determined based on a turbo mode.

The turbo mode is determined as follows.

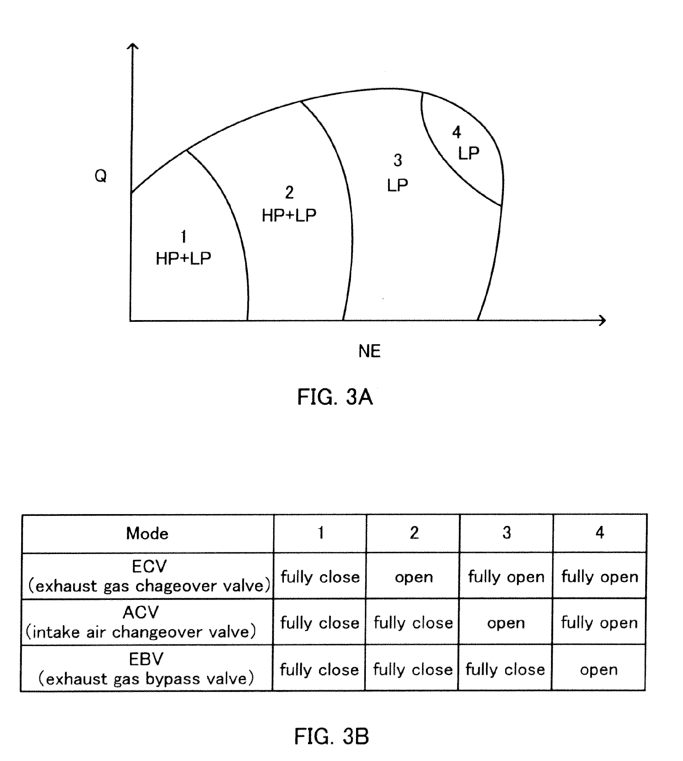

As shown in FIG. 3 (A), the first apparatus stores, in the ROM 82, a turbo mode table "MapTurbo (NE, Q)" which defines a relation among "an engine rotational speed NE, a fuel injection amount Q, a the turbo mode" in advance. Each of the figures "1" to "4" shown in FIG. 3 (A) indicates a turbo mode number, "HP+LP" shown in FIG. 3 (A) indicates that both of the high pressure supercharger 61 and the low pressure supercharger 62 are operated, and "LP" indicates that the low pressure supercharger 62 is preferentially operated.

Here, FIG. 3 (B) shows an operating state of each control valve in the each turbo mode. In FIG. 3 (B), the "fully close" indicates that an opening degree of the control valve is set at an opening degree to shut down (completely close) a passage in which the control valve is disposed, so that the passage is in a condition where the air or the exhaust gas cannot pass through the passage. On the other hand, the "fully open" indicates that the opening degree of the control valve is set at an opening degree to completely/fully open (to its maximum) the passage in which the control valve is disposed, so that the passage is in a condition where the air or the exhaust gas can pass through the passage without being substantially affected by the control valve. The "open" indicates that the opening degree of the control valve is set at an opening degree between "the fully close" and "the fully open", so that the passage is in a condition where an amount of the air or an amount of the exhaust gas passing through the passage in which the control valve is disposed can be varied depending on the opening degree of the control valve.

It should be noted that, in FIG. 3 (B), "ECV" is an abbreviated name of the exhaust gas changeover valve (the first control valve) 66, "ACV" is an abbreviated name of the intake air changeover valve (the second control valve) 64, and "EBV" is an abbreviated name of the exhaust gas bypass valve (the third control valve) 68.

The first apparatus applies an actual engine rotational speed NE and an actual fuel injection amount Q to the turbo mode Table MapTurbo (NE, Q) to thereby determine the turbo mode (the operation state of the each control valve). Thereafter, the first apparatus controls the each control valve in accordance with the determined turbo mode. Furthermore, the first apparatus controls the opening degree of the each control valve regardless of the actual engine rotational speed NE and the actual fuel injection amount Q, when the engine is operated under a decelerate condition on which a required torque for the engine is equal to or smaller than a predetermined value.

For example, when the opening degree of the each control valve is controlled in accordance with "the turbo mode 2", the first apparatus control the exhaust gas changeover valve 66 so that the operating condition thereof is "open". Specifically, the first apparatus set the target opening degree of the exhaust gas changeover valve 66 so that the target supercharging pressure that is defined in accordance with the operating condition of the engine 10 and the actual supercharging pressure obtained by the supercharging pressure sensor 73 correspond each other, and send an instruction signal in order to correspond the opening degree of the exhaust gas changeover valve 66 to the target opening degree toward the exhaust gas changeover valve actuator 66a. That is, the "supercharging pressure feedback control" with the exhaust gas changeover valve 66 is carried out. Furthermore, the first apparatus control the intake air changeover valve 64 and the exhaust gas bypass valve 68 so that the operating condition thereof is "fully close". Specifically, the first apparatus set the target opening degrees of the intake air changeover valve 64 and the exhaust gas bypass valve 68 to the fully closed opening degree, and send instruction signals in order to correspond the opening degrees of the intake air changeover valve 64 and the exhaust gas bypass valve 68 to the target opening degrees toward the intake air changeover valve actuator 64a and the exhaust gas bypass valve actuator 68a.

Furthermore, when the opening degree of the each control valve is controlled in accordance with "the turbo mode 1", the first apparatus control all control valves (the intake air changeover valve 64, the exhaust gas changeover valve 66 and the exhaust gas bypass valve 68) so that the operating condition thereof is "fully close". In addition, when the opening degree of the each control valve is controlled in accordance with "the turbo mode 3", the first apparatus control: the exhaust gas changeover valve 66 so that the operating condition thereof is "fully open"; the intake air changeover valve 64 so that the operating condition thereof is "open"; and the exhaust gas bypass valve 68 so that the operating condition thereof is "fully close". In the meantime, the opening degree of the intake air changeover valve 64 is changed so that the target supercharging pressure and the actual supercharging pressure correspond each other, in this case. That is, the supercharging pressure feedback control with the intake air changeover valve 64 is carried out. Furthermore, when the opening degree of the each control valve is controlled in accordance with "the turbo mode 4", the first apparatus control: the exhaust gas changeover valve 66 and the intake air changeover valve 64 so that the operating condition thereof is "fully open"; and the exhaust gas bypass valve 68 so that the operating condition thereof is "open". In the meantime, the opening degree of the exhaust gas bypass valve 68 is changed so that the target supercharging pressure and the actual supercharging pressure correspond each other, in this case. That is, the supercharging pressure feedback control with the exhaust gas bypass valve 68 is carried out.

<Abnormality Determination for Control Valve>

Next will be described methods to determine an abnormality of the control valve in the first apparatus.

The first apparatus makes a determination as to whether or not the exhaust gas changeover valve 66 normally operates, As indicated above, the exhaust gas changeover valve 66 is a control valve whose "actual opening degree" is obtained by the exhaust gas changeover valve opening degree sensor 75. Specifically, when the actual opening degree Oecv and the target opening degree Oecvtgt of the exhaust gas changeover valve 66 do not correspond each other (actually, when the absolute value of the difference between the actual opening degree Oecv and the target opening degree Oecvtgt is equal to or more than a predetermined value (first opening degree)), the first apparatus determines that the exhaust gas changeover valve 66 is "abnormal". On the other hand, when the actual opening degree Oecv and the target opening degree Oecvtgt of the exhaust gas changeover valve 66 correspond each other (actually, when the absolute value of the difference between the actual opening degree Oecv and the target opening degree Oecvtgt is smaller than the predetermined value (first opening degree)), the first apparatus determines that the exhaust gas changeover valve 66 is "normal".

Next, when the first apparatus determines that the exhaust gas changeover valve 66 is "normal", the first apparatus determines whether or not the exhaust gas bypass valve 68 normally operates. Specifically, when the abnormality determining condition, which includes whether or not the engine 10 is operated in the turbo mode 2, is satisfied in this case, the first apparatus obtains the opening degree Oecv1 of the exhaust gas changeover valve 66. After that, the first apparatus sends an instruction signal (opening degree changing signal) for forcibly changing the opening degree Oebv of the exhaust gas bypass valve 68 to the exhaust gas bypass valve 68 (actually, to the exhaust gas bypass valve actuator 68a). Then, the first apparatus obtains the opening degree Oecv2 at a timing "after" the instruction signal is sent to the exhaust gas bypass valve 68.

Then, when the absolute value of the changing amount of the opening degree of the exhaust gas changeover valve 66 (|Oecv2-Oecv1|) between before and after the opening degree changing signal is sent to the exhaust gas bypass valve 68 is smaller than a predetermined value Oecvth, the first apparatus determines that the exhaust gas bypass valve 68 is "abnormal". Hereinafter, this determination method will be referred to as "an abnormality determination method 1".

The "opening degree changing signal" that is sent to the exhaust gas changeover valve 66 may include an instruction signal to "increase" the opening degree of the exhaust gas bypass valve 68 and an instruction signal to "decrease" the opening degree of the exhaust gas bypass valve 68. However, as indicated above, in the first apparatus, the abnormality determination of the exhaust gas bypass valve 68 by the abnormality determination method 1 is carried out when the engine 10 is operated in "the turbo mode 2". When the engine 10 is operated in "the turbo mods 2", the exhaust gas bypass valve 68 is controlled to be the "fully close" condition, as shown in FIG. 3(B). Accordingly, the opening degree of the exhaust gas bypass valve 68 cannot be decreased. Therefore, in the first apparatus, when the abnormality determination is carried out by the abnormality determination method 1, the instruction signal to "increase" the opening degree (opening degree increasing instruction signal) is sent to the exhaust gas bypass valve 68.

Next will be described a reason why "whether or not the exhaust gas bypass valve 68 normally operates" can be determined by the abnormality determination method 1, with an example that the opening degree increasing instruction signal is sent to the exhaust gas bypass valve 68.

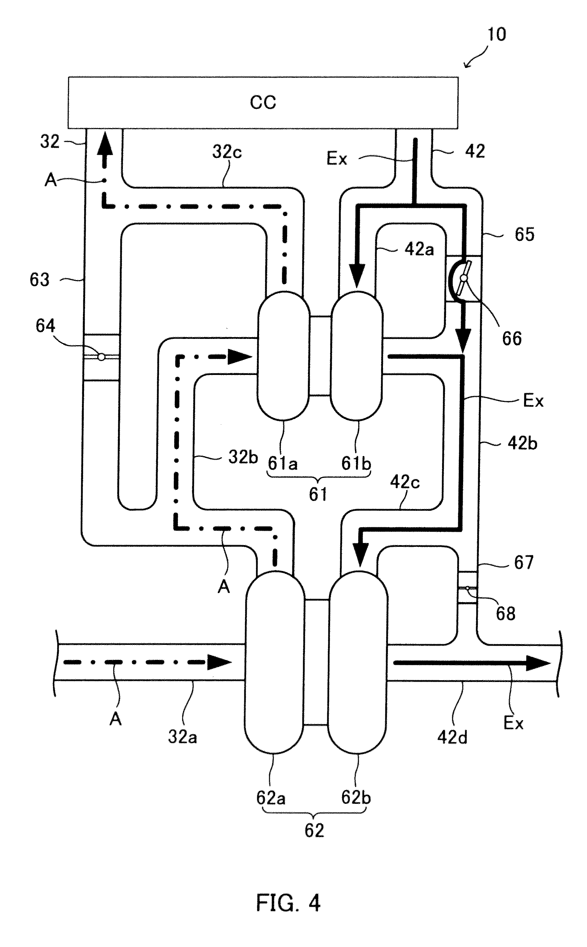

As indicated above, the abnormality determination method 2 can be carried out when the engine 10 is operated in "the turbo mode 2". When the engine 10 is operated in "the turbo mode 2", the intake air changeover valve 64 and the exhaust gas bypass valve 68 is controlled to be "fully close" condition, and the exhaust gas bypass valve 68 is controlled to be the "fully close" condition, as shown in FIG. 3(B). Accordingly, as shown in FIG. 4, an air (new air) A that is introduced in the intake air passage 32a (a part of the intake air passage 32) is introduced into the combustion chamber CC of the engine 10 through the low pressure compressor 62a, the intake air passage 32b (a part of the intake air passage 32) between the low pressure compressor 62a and the high pressure compressor 61 a, the high pressure compressor 61 a and the intake air passage 32c.

The new air A that is mixed with a fuel and burned in the combustion chamber CC is discharged to the exhaust gas passage 42 as the exhaust gas Ex. At this time, as shown in FIG. 4, "a part of the exhaust gas Ex" is introduced in the high pressure turbine 61 b while "the other part of the exhaust gas Ex" passes through the high pressure turbine-bypass passage section 65. A ratio between an amount of "the part of the exhaust gas Ex" and an amount of "the other part of the exhaust gas Ex" is determined by the opening degree of the exhaust gas changeover valve 66. "The part of the exhaust gas Ex" that passes through the high pressure turbine 61 b merges to "the other part of the exhaust gas Ex" that passes through the high pressure turbine-bypass passage section 65 at the exhaust gas passage 42b (a part of the exhaust gas passage 42). Then the merged exhaust gas Ex is discharged to an outside of the engine 10 through the low pressure turbine 62b.

As a result thereof, both of the high pressure turbine 61 b and the low pressure turbine 62b are driven, and then the new air A is compressed by the high pressure compressor 61 a and the low pressure compressor 62a. At this time, the first apparatus carries out a feedback control of the opening degree of the exhaust gas changeover valve 66 in such a manner that the target supercharging pressure Pimtgt. that is determined in response to the operating condition of the engine 10 corresponds to the supercharging pressure Pim that is obtained by the supercharging pressure sensor 74. Thereby, the condition that the supercharging pressure Pim substantially corresponds to the target supercharging pressure Pimtgt is maintained.

The first apparatus sends the opening degree changing signal to the exhaust gas bypass valve 68 during the period where the opening degree of the exhaust gas changeover valve 66 is subject to the feedback control. Here, it is assumed that the opening degree of the exhaust gas changeover valve 66 is maintained as the opening degree Oecv1 in the period "before" the opening degree changing signal is sent to the exhaust gas bypass valve 68. When the opening degree increasing instruction signal is sent to the exhaust gas bypass valve 68, the opening degree of the exhaust gas bypass valve 68 is changed in response to the opening degree increasing instruction signal, if the exhaust gas bypass valve 68 is normal.

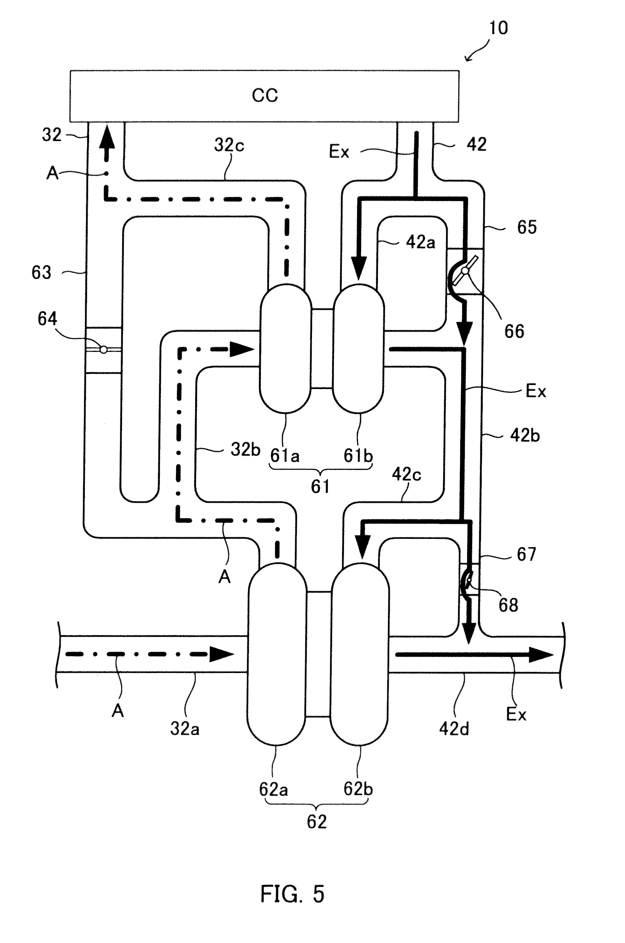

When the opening degree of the exhaust gas bypass valve 68 is increased, a part of the exhaust gas (the above merged exhaust gas) Ex is discharged to the outside of the engine 10 through the low pressure turbine-bypass passage section 67, as shown in FIG. 5. Accordingly, the energy of the exhaust gas Ex supplied to the low pressure turbine 62b "after" the opening degree increasing instruction signal is sent to the exhaust gas bypass valve 68 decreases by an amount of the "part of the exhaust gas Ex" that pass through the low pressure turbine-bypass passage section 67, compared with the energy of the exhaust gas Ex supplied to the low pressure turbine 62b "before" the opening degree changing signal is sent to the exhaust gas bypass valve 68. As a result thereof, the pressure ratio of the low pressure compressor 62a (= a pressure of the new air A in the downstream side of the low pressure compressor 62a / a pressure of the new air A in the upstream side of the low pressure compressor 62a) "decreases".

At this time, the first apparatus increases the ratio of the high pressure compressor 61a (= a pressure of the new air A in the downstream side of the high pressure compressor 61 a / a pressure of the new air A in the upstream side of the high pressure compressor 61a) so as to compensate "the amount of reduction of the ratio of the low pressure compressor 62a" in order to maintain the condition where the supercharging pressure Pim corresponds to the target supercharging pressure Pimtgt. Specifically, at this time, the first apparatus decreases the opening degree of the exhaust gas changeover valve 66 from an opening degree Oecv1 to an opening degree Oecv2 (Oecv2<Oecv1). Thereby, the energy of the exhaust gas Ex introduced into the high pressure turbine 61 b is increased, and then, the pressure ratio of the high pressure compressor 61 a is "increased". As a result thereof, the condition where the supercharging pressure Pim corresponds to the target supercharging pressure Pimtgt is maintained.

Therefore, when the exhaust gas changeover valve 66 is "normal" and the engine 10 is driven in "the turbo mode 2", if the opening degree of the exhaust gas bypass valve 68 is changed when the opening degree increasing instruction signal is sent to the exhaust gas bypass valve 68 (the absolute value of the difference between the opening degree Oacv2 and the opening degree Oecv1 is smaller than the predetermined value Oecvth), the exhaust gas bypass valve 68 can be determined to be "abnormal".

In addition, as is understood from the above descriptions, the abnormality determination of the exhaust gas bypass valve 68 can be also carried out by the abnormality determination method 1, in the case that an instruction signal to "decrease" the opening degree of the exhaust gas bypass valve 68 (the opening degree decreasing instruction signal) is sent thereto.

<Actual Operation>

Next will be described an actual operation of the first apparatus.

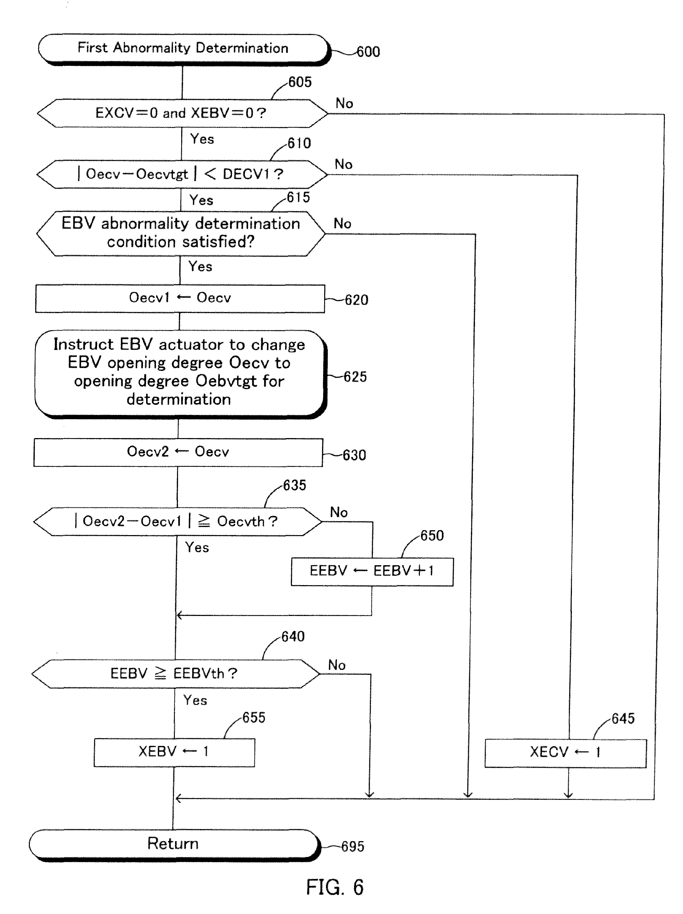

The CPU 81 executes routines each shown by flowcharts in FIGs. 6 to 8 every elapse of a predetermined time period. The CPU 81 uses an abnormal exhaust gas changeover valve-flag XECV, an abnormal exhaust gas bypass valve-flag XEBV, and an abnormality occurrence-flag XEMG.

The abnormal exhaust gas changeover valve-flag XECV indicates that the exhaust gas changeover valve 66 is not determined to be "abnormal" (is determined to be "normal"), when the value of the flag XECV is "0". The abnormal exhaust gas changeover valve-flag XECV indicates that the exhaust gas changeover valve 66 is determined to be "abnormal", when the value of the flag XECV is "1".

The abnormal exhaust gas bypass valve-flag XEBV indicates that the exhaust gas bypass valve 68 is not determined to be "abnormal" (is determined to be "normal"), when the value of the flag XEBV is "0". The abnormal exhaust gas bypass valve-flag XEBV indicates that the exhaust gas bypass valve 68 is determined to be "abnormal", when the value of the flag XEBV is "1".

The abnormality occurrence-flag XEMG indicates that both of the exhaust gas changeover valve 66 and the exhaust gas bypass valve 68 is determined to be "normal" when the value of the flag XEMG is "0". The abnormality occurrence-flag XEMG indicates that either the exhaust gas changeover valve 66 or the exhaust gas bypass valve 68 is determined to be "abnormal", when the value of the flag XEMG is "1".

All of values of flags are stored in the back-up RAM 84. Furthermore, all of values of the flags are set at "0" when a predetermined operation is done to the electric control apparatus 80 after it is determined that the exhaust gas changeover valve 66 and the exhaust gas bypass valve 68 are not abnormal, when the shipment of a car that is equipped with the engine 10 and when the car is subject to a periodic maintenance.

Next will be described each routine that is executed by the CPU 81 in detail. The CPU 81 executes "a first abnormality determining routine" shown by a flowchart in FIG. 6 every elapse of a predetermined time period. The CPU 81 determines whether or not either the exhaust gas changeover valve 66 or the exhaust gas bypass valve 68 is abnormal or not.

Specifically, the CPU 81 starts executing the routine from step 600 in FIG. 6 and proceeds to step 605 at which the CPU 81 determines whether or not the value of the abnormal exhaust gas changeover valve-flag XECV is "0" as well as the value of the abnormal exhaust gas bypass valve-flag XEBV is "0". If at least one of the abnormal exhaust gas changeover valve-flag XECV and the abnormal exhaust gas bypass valve-flag XEBV is "1" at the present time, the CPU 81 therefore makes a "No" determination at step 605 to directly proceed to 695 at which the CPU81 ends the present routine tentatively.

On the other hand, if the value of the abnormal exhaust gas changeover valve-flag XECV is "0" as well as the value of the abnormal exhaust gas bypass valve-flag XEBV is "0", the CPU 81 makes a "Yes" determination at step 605 to proceed to step 610. Next will be described under the assumption that the value of the abnormal exhaust gas changeover valve-flag XECV is "0" and the value of the abnormal exhaust gas bypass valve-flag XEBV is "0" at the present time.

The CPU 81 determines, at step 610, whether or not the absolute value of the difference between the opening degree Oecv of the exhaust gas changeover valve 66 and the target opening degree Oecvtgt of the exhaust gas changeover valve 66 is smaller than the predetermined value DECV1. That is, the CPU 81 determines whether the exhaust gas changeover valve 66 is normal or abnormal at step 610.

(Assumption 1)

The case that the both of the exhaust gas changeover valve 66 and the exhaust gas bypass valve 68 is normal

Here, it is assumed that the both of the exhaust gas changeover valve 66 and the exhaust gas bypass valve 68 is normal. In this case, the opening degree Oecv of the exhaust gas changeover valve 66 corresponds to the target opening degree Oecvtgt of the exhaust gas changeover valve 66, and then the absolute value of the difference between the opening degree Oecv of the exhaust gas changeover valve 66 and the target opening degree Oecvtgt of the exhaust gas changeover valve 66 is smaller than the predetermined value DECV1. Accordingly, the CPU 81 makes a "Yes" determination at step 610 to proceed to step 615.

The CPU 81 determines, at step 615, whether or not "the abnormality determination condition to determine whether or not the exhaust gas bypass valve (EBV) 66 is abnormal (EBV abnormality determination condition)" is satisfied. Specifically, the CPU 81 determines, at step615, that the EBV abnormality determination condition is satisfied when all of the following conditions are satisfied. In other words, the CPU 81 determines that the EBV abnormality determination condition is not satisfied when at least one of the following conditions is not satisfied.

(Condition 1) The engine 10 is operated in the turbo mode 2.
(Condition 2) The opening degree Oecv of the exhaust gas changeover valve 66 is larger than the predetermined value E.
(Condition 3) The engine 10 is being operated in a normal operating state.

As indicated above, when the above condition 1 is satisfied, the opening degree Oecv of the exhaust gas changeover valve 66 is subject to the feedback control (supercharging pressure feedback control) so that the supercharging pressure Pim corresponds to the target supercharging pressure Pimtgt. That is, the abnormality determination of the exhaust gas bypass valve 68 can be carried out by the above "abnormality determination method 1". Furthermore, when the above condition 1 is satisfied, a mis-determination on the abnormality determination of the exhaust gas bypass valve 68 can be avoided. More specifically, when "an abnormality that the exhaust gas bypass valve 68 is adhesively fixed at the fully close condition (fully-closed-adhesively-fixed abnormality)" is occurred and the target opening degree Oecvtgt of the exhaust changeover valve 66 is set at "fully open'" opening degree (for example, when the engine 10 is driven in "the turbo mode 1". See FIG. 3B), the opening degree Oecv of the exhaust gas changeover valve 66 corresponds to the opening degree of the exhaust gas bypass valve 68. Accordingly, when the abnormality determination of the exhaust gas changeover valve 66 (the above step 610) is carried out in this case, the exhaust gas bypass valve 68 is not determined to be abnormal even though the exhaust gas bypass valve 68 is abnormal (fully-closed-adhesively-fixed abnormality). If the abnormality determination of the exhaust gas bypass valve 68 is carried out at this time (when the exhaust gas bypass valve 68 is abnormal), there is the possibility that the mis-determination is occurred.

However, when the above condition 1 is satisfied, the abnormality determination of the exhaust gas bypass valve 68 (the above step 610) is carried out during "an operation according to the turbo mode 2 (that is, an operation where the target opening degree of the exhaust gas changeover valve 66 is different from the fully open opening degree) before the abnormality determination of the exhaust gas bypass valve 68. Therefore, even if some abnormalities that include fully-closed-adhesively-fixed abnormality are occurred for the exhaust gas bypass valve 68, it can be surely determined that the exhaust gas bypass valve 68 is abnormal. Accordingly, an abnormality determination of the exhaust gas bypass valve 68 can be avoided in the case the exhaust gas bypass valve 68 is abnormal. That is, when the above condition 1 is satisfied, a mis-determination on the abnormality determination of the exhaust gas bypass valve 68 can be avoided.

Furthermore, when the above condition 2 is satisfied, the opening degree Oecv of the exhaust gas changeover valve 66 can be adequately changed (decreased, in the first apparatus) along with the change of the opening degree of the exhaust gas bypass valve 68, even when the opening degree of the exhaust gas bypass valve 68 is forcibly changed (increased, in the first apparatus) according to "the abnormality determination method 1", In addition, when the above condition 3 is satisfied, a change of the opening degree Oecv of the exhaust gas changeover valve 66 by some reason that is different from the change of the opening degree of the exhaust gas bypass valve 68 can be avoided. As indicated above, all of the above conditions 1 to 3 are satisfied, the abnormality determination of the exhaust gas bypass valve 68 can be appropriately carried out by the above abnormality determination method 1.

In addition, for example, the above condition 3 may be such a condition that is satisfied when one or more of the following conditions is (are) satisfied. The conditions includes: an absolute value of a changing amount of the engine rotational speed NE in a lapse of a predetermined time period is smaller than a predetermined value NEth; an absolute value of a changing amount of the fuel injection amount Q in a lapse of the predetermined time period is smaller than a predetermined value Qth; and an absolute value of a changing amount of the opening degree Accp of the accelerator pedal in a lapse of the predetermined time period is smaller than a predetermined value Accpth.

When the above EBV abnormality determination condition is not satisfied at the present time, the CPU 81 makes a "neo" determination at step 615 to directly proceed to step 695, and then at which the CPU81 ends the present routine tentatively. On the other hand, when the above EBV abnormality determination condition is satisfied at the present time, the CPU 81 makes a "yews" determination at step 615 to proceed to step 620. Next will be described under the assumption that the EBV abnormality determination condition is satisfied at the present time.

The CPU 81 obtains the opening degree Oecv of the exhaust gas changeover valve 66 at the present time at step 620, stores the obtained opening degree Oecv as "an opening degree Oecv as a first value", and proceeds to step 625. It should be noted that this timing will be referred to as "a first timing".

Subsequently, at step 625, the CPU 81 provides to the exhaust gas bypass valve actuator 68a an instruction (opening degree increasing instruction) to change the opening degree Oebv of the exhaust gas bypass valve 68 from an opening degree Oebv0 at the present time to an predetermined opening degree Oecvtgt for determination (Oebvtgt>Oebv). The CPU 81 thereafter waits until a predetermined time period has elapsed. Here, the timing after a lapse of the predetermined time period from the instruction signal is sent to the exhaust gas bypass valve 68 is referred to as a "second timing".

In addition, in the first apparatus, the opening degree Oebv (=Oebv0) is the fully open opening degree at the first timing since the engine 10 is driven in the turbo mode 2 when the abnormality determination condition is satisfied. The opening degree Oebvtgt for determination is set to a value where the opening degree of the exhaust gas bypass valve 68 is changed by a sufficiently large amount when an actual opening degree of the exhaust gas bypass valve 68 is changed from the opening degree Oebv at the first timing to the opening degree Oebvtgt for determination.

When the second timing comes, the CPU 81 proceeds to steep 630 at which the CPU 81 obtains the opening degree Oebv0 at the second timing, and stores the obtained opening degree Oebv0 as "an opening degree Oecv2 as a second value".

Subsequently, the CPU 81 proceeds to step 635 at which the CPU 81 determines whether or not an absolute value of a difference between the opening degree Oebv2 and the opening degree Oebv1 is larger than or equal to a threshold changing amount Oecvth1. The threshold changing amount Oecvth is also referred to as the first threshold changing amount and is set to "a minimum value of the difference between the opening degree Oebv2 and the opening degree Oebv1 when the exhaust gas bypass valve 68 is normal."

In addition, in the first apparatus, the predetermined value E is set so as to be a value that is equal to or more than the threshold changing amount Oecvth. Thereby, when the opening degree of the exhaust gas bypass valve 68 is increased from the opening degree Oebv to the opening degree Oebvtgt for determination, the opening degree of the exhaust gas bypass valve 68 can be changed by an amount more than the above threshold changing amount Oecvth. As a result thereof, the determination at step 635 can be appropriately carried out.

According to the assumption 1, the exhaust gas bypass valve 68 is normal, and then the absolute value of the difference between the opening degree Oebv2 and the opening degree Oebv1 is equal to or larger than the threshold changing amount Oecvth. Therefore, the CPU 81 makes a "Yes" determination at step 635 to proceed to step 640.

At step 640, the CPU 81 determines whether or not an amount of times of the preliminary determination for abnormality of the exhaust gas bypass valve EEBV (hereinafter referred to as a "amount of times of the preliminary determination EEBV") is equal to or larger than a threshold amount of times of the preliminary determination for abnormality of the exhaust gas bypass valve EEBVth (hereinafter referred to as a "the threshold amount of times of the preliminary determination EEBVth"). The threshold amount of times of the preliminary determination EEBVth is set to a predetermined value equal to or larger than 1. The amount of times of the preliminary determination EEBV is set to zero by an initial routine executed when the ignition key switch (not shown) is turned ON from OFF.

According to the assumption 1, the exhaust gas bypass valve 68 is normal, and then, the amount of times of the preliminary determination EEBV is zero, which is set by the initial routine. Accordingly, the CPU 81 makes a "Yes" determination at step 640 to proceed to step 695 at which the CPU81 ends the present routine tentatively.

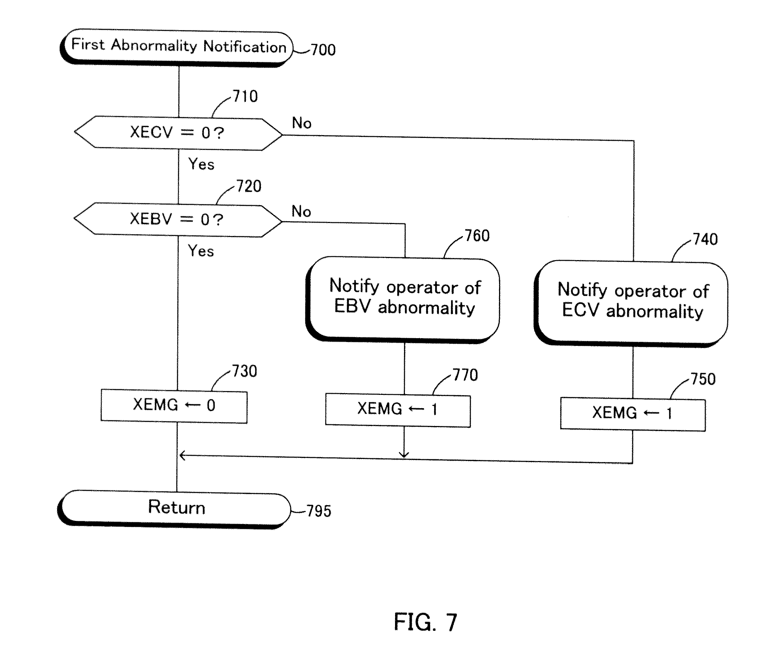

Furthermore, the CPU 81 executes "a first abnormality notifying routine" shown by a flowchart in FIG. 7 every elapse of a predetermined time period. By this routine, when at least one of the exhaust gas changeover valve 66 and the exhaust gas bypass valve 68 is abnormal, the first apparatus notifies the operator of the engine, 10 accordingly.

Specifically, the CPU 81 starts executing the routine from steep 700 in FIG. 7 and proceeds to step 710 at which the CPU 81 determines whether or not the value of the abnormal exhaust gas changeover valve-flag XECV is "0". The value of the abnormal exhaust gas changeover valve-flag XECV is "0" at the present time, and therefore, the CPU 81 makes a "Yes" determination at step 710 to proceed to step 720.

The CPU 81 determines, at step 720, whether or not the value of the abnormal exhaust gas bypass valve-flag XEBV is "0". The value of the abnormal exhaust gas bypass valve-flag XEBV is "0" at the present time, and therefore, the CPU 81 makes a "Yes" determination at stop 720 to proceed to step 730 at which the CPU81 set the value of the abnormality occurrence-flag XEMG at "0".

After that, the CPU 81 proceeds to step 795 at which the CPU81 ends the present routine tentatively. Accordingly, when both of the exhaust gas bypass valve 68 and the exhaust gas bypass valve 68 is normal (or, the both of the value of the abnormal exhaust gas changeover valve-flag XECV and the value of the abnormal exhaust gas bypass valve-flag XEBV is "0"), the first apparatus does not notify the operator.

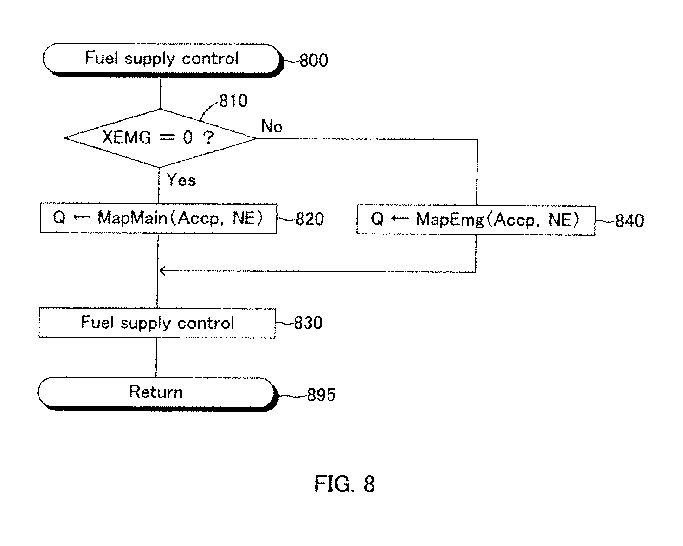

Furthermore, the CPU 81 executes "a fuel supply control routine" shown by a flowchart in FIG. 8 every time when a crank angle of any one of the cylinders coincides with a predetermined crank angle θf (e.g., 90 °crank angle before a compression top dead center). The CPU 81 calculates the fuel injection amount Q and instructs to inject the fuel, by this routine. The cylinder whose crank angle coincides with the predetermined crank angle θf before the compression top dead center will be referred to as "a fuel injection cylinder", hereinafter.

Specifically, when any one of the cylinders coincides with the predetermined crank angle θf, the CPU 81 starts executing the routine from step 800 in FIG. 8, and proceeds to step 810 at which the CPU 81 determines whether or not the value of the abnormality occurrence-flag XEMG is "0". The value of the abnormality occurrence-flag XEMG is "0" at the present time, and therefore, the CPU 81 makes a "Yes" determination at step 810 to proceed to step 820.

At stop 820, the CPU 81 obtains the opening degree Accp of the accelerator pedal based on the output value of the accelerator opening degree sensor 76, and obtains the engine rotational speed NE based on the output value of the crank position sensor 74. Then, tha CPU 81 applies the opening degree Accp of the accelerator pedal at the present time and the engine rotational speed NE at the present time to a fuel injection amount table for normal operating state MapMain (Accp, NE) so as to obtain a fuel injection amount Q, the table MapMain (Accp, NE) defining a relation among "the opening degree Accp of the accelerator pedal, the engine rotational speed NE, and the fuel injection amount Q" when all of the control valves are normal, and the table MapMain (Accp, NE) being defined in advance. The fuel injection amount Q when all of the control valves are normal corresponds to a required torque. Hereinafter, an operation in which the fuel injection amount determined by the fuel injection amount table for normal operating state MapMain (Accp, NE) is referred to as "a normal operation". MapMain

Subsequently, the CPU 81 proceeds to step 830 at which the CPU 81 provides to the injector 22 disposed for the fuel injection cylinder an instruction to inject the fuel whose amount is the fuel injection amount Q from the injector 22. That is, at this time, the fuel whose amount is the fuel injection amount Q is supplied to the fuel injection cylinder. The CPU 81 thereafter proceeds to step 895 at which the CPU 81 ends the present routine tentatively.

As indicated above, the first apparatus performs "the normal operation" in which the fuel whose amount is equal to the fuel injection amount Q determined based on the fuel injection amount table for normal operating state MapMain (Accp, NE) is injected to the fuel injection cylinder, when both of the exhaust gas bypass valve 68 and the exhaust gas bypass valve 68 is normal.

(Assumption 2)

The case that the exhaust gas changeover valve 66 is abnormal and the exhaust gas bypass valve 68 is normal

In this case, the opening degree Oecv of the exhaust gas changeover valve 66 does not correspond to the target opening degree Oecvtgt of the exhaust gas changeover valve 66, and then the absolute value of the difference between the opening degree Oecv of the exhaust gas changeover valve 66 and the target opening degree Oecvtgt of the exhaust gas changeover valve 66 is equal to or larger than the predetermined value DECV1 (the absolute value is equal to or larger than the predetermined value DECV1 when the engine 10 is driven at least in the turbo mode 2).

Accordingly, when the CPU 81 starts executing the routine from step 600 in FIG. 6 at the predetermined timing, and the CPU 81 proceeds to step 610 through step 605; the CPU 81 makes a "No" determination at step 610 to proceed to step 645. At step 645, the CPU 81 set the value of the abnormal exhaust gas changeover valve-flag XECV at "1 ", and proceed to step 695 at which the CPU81 ends the present routine tentatively.

In this case, when the CPU 81 starts executing the routine from step 700 in FIG. 7, the CPU 81 proceeds to step 71 0. The value of the abnormal exhaust gas changeover valve-flag XECV is "1" at the present time, and therefore, the CPU 81 makes a "No" determination at step 710 to proceed to step 740.

At step 740, the CPU 81 notifies the operator of the engine 10 that "the exhaust gas bypass valve 68 is abnormal". This notification is carried out by turning on a warning lamp which is not shown, or the like. Thereafter, the CPU 81 proceeds to step 750 to sets the value of the abnormality occurrence-flag XEMG art "1", and proceeds to step 795 at which the CPU 81 ends the present routine tentatively.

As indicated above, when the exhaust gas bypass valve 68 is abnormal, the first apparatus notifies the operator of the engine 10 that "the exhaust gas bypass valve 68 is abnormal".

Further, when the crank angle of any one of the cylinders coincides with the predetermined crank angle θf, the CPU 81 starts executing the routine from step 800 in FIG. 8 and proceeds to step 810. The value of the abnormality occurrence-flag XEMG is "1" at the present time, and the CPU 81 therefore makes a "No" determination at step 810 to proceed to step 840.

At step 840, the CPU 81 obtains the opening degree Accp of the accelerator pedal based on the output value of the accelerator opening degree sensor 76, and obtains the engine rotational speed NE based on the output value of the crank position sensor 74. Then, the CPU 81 applies the opening degree Accp of the accelerator pedal at the present time and the engine rotational speed NE at the present time to an fuel injection table for abnormality occurring state MapEmg (Accp, NE) so as to obtain the fuel injection amount Q when the abnormal state is occurring, the table MapEmg (Accp, NE) defining a relation among "the opening degree Accp of the accelerator pedal, the engine rotational speed NE, and the fuel injection amount Q" in advance, and the table MapEmg (Accp, NE) being used when "any control valve is abnormal". Hereinafter, an operation in which the fuel injection amount determined by the fuel injection table for abnormality occurring state MapEmg (Accp, NE) is referred to as "an emergency operation".

The fuel injection table for abnormality occurring state MapEmg (Accp, NE) is a table to determine "the fuel injection amount Q which is unlikely to cause ether members of the engine 10 or the whole engine 10 to be broken, even if the engine 10 is continued to be operated when any control valve is abnormal". Accordingly, it should be appreciated that the fuel injection amount determined based on the fuel injection table for abnormality occurring state MapEmg (Accp, NE) with respect to a certain set of "the opening degree Accp of the accelerator pedal and the engine rotational speed NE" is smaller than the fuel injection amount determined based on the fuel injection amount table for normal operating state MapMain (Accp, NE) with respect to the certain set of "the opening degree Accp of the accelerator pedal and the engine rotational speed NE".

Subsequently, the CPU 81 proceeds to step 830 at which the CPU 81 to inject the fuel whose amount is the fuel injection amount Q from the injector 22 disposed for the fuel injection cylinder. Thereafter, the CPU 81 proceeds to step 895 at which the CPU 81 ends the present routine tentatively.

As described above, when the exhaust gas changeover valve 66 is abnormal, the first apparatus notifies the operator of the engine 10 that "the exhaust gas changeover valve 66 is abnormal" and performs the emergency operation.

In addition, when the CPU 81 starts executing the routine from step 600 in FIG. 6 and proceeds to step 605 at which the CPU 81 makes a "No" determination at step 605 to proceed to step 695 since the value of the abnormal exhaust gas changeover valve-flag XECV is "1". That is, when the value of the abnormal exhaust gas changeover valve-flag XECV is set at "1" once, the value of the abnormal exhaust gas changeover valve-flag XECV is kept at "1" without executing the abnormality determination of the exhaust gas bypass valve 68 (step 610 of FIG. 6). As a result thereof, the first apparatus maintains to perform "the emergency operation" while the first apparatus notifies the operator of the engine 10 that "the exhaust gas changeover valve 66 is abnormal".

(Assumption 3)

The case that the exhaust gas bypass valve 68 is abnormal and the exhaust gas bypass valve 68 is normal

In this case, the opening degree Oecv of the exhaust gas changeover valve 66 correspond to the target opening degree Oecvtgt of the exhaust gas changeover valve 66, and then the absolute value of the difference between the opening degree Oecv of the exhaust gas changeover valve 66 and the target opening degree Oecvtgt of the exhaust gas changeover valve 66 is smaller than the predetermined value DECV1 .

Accordingly, when the CPU 81 starts executing the routine from step 600 in FIG. 6 at the predetermined timing, and the CPU 81 proceeds to step 610 through step 605, the CPU 81 makes a "Yes" determination at step 610 to proceed to step 615. If the EBV abnormality determination condition is satisfied at the present time, the CPU 81 makes a "Yes" determination at step 615 to proceed to step 635 through steps 620 to 630.

According to the assumption 3, the exhaust gas bypass valve 68 is abnormal, and therefore, the opening degree of the exhaust gas bypass valve 68 is not sufficiently changed even when the opening degree changing signal is sent the exhaust bypass valve actuator 68a at step 625. Therefore, the absolute value of the difference between the opening degree Oecv1 of the exhaust gas bypass valve 68 before the opening degree changing signal is sent the exhaust gas bypass valve actuator 68a and the opening degree Oecv2 of the exhaust gas bypass valve 68 after the opening degree changing signal is sent the exhaust gas bypass valve actuator 68a is smaller than the threshold changing amount Oecvth. Accordingly, the CPU 81 makes a "No" determination at step 635 to proceed to step 650.

At step 650, the CPU 81 updates and determines the amount of times of the preliminary determination EEBV in accordance with the following formula (1). In the following formula (1), EEBV(k+1) represents the amount of times of the preliminary determination EEBV to be updated by this execution, and EEBV(k) represents the amount of times of the preliminary determination EEBV before the value is updated by this execution. That is, the CPU 81 increases the amount of times of the preliminary determination EEBV by an amount of 1.

$$EEBV(k+1) = EEBV(k) + 1 \quad (1)$$

Subsequently, the CPU 81 proceeds to step 640. The amount of times of the preliminary determination EEBV is just increased by the amount of 1 from zero which is set by the initial routine. Therefore, if the threshold amount of times of the preliminary determination EEBVth is set at equal to or larger than 2, the CPU 81 makes a "No" determination at step 640 to proceed to step 695 at which the CPU81 ends the present routine tentatively.

On the other hand, if the state that "the exhaust gas bypass valve 68 is abnormal" as the assumption 3 is maintained, the execution of step 650 repeatedly executed, and then, the amount of times of the preliminary determination EEBV gradually increases to reach up to the threshold amount of times of the preliminary determination EEBVth. At that time, when the CPU 81 executes the execution of step 640, the CPU 81 makes a "Yes" determination at step 640 to proceed to step 655 to set the value of the abnormal exhaust gas bypass valve-flag XEBV at "1". After that, the CPU 81 proceeds to step 695 at which the CPU81 ends the present routine tentatively.

At this time, the CPU 81 starts executing the routine from step 700 in FIG. 7 at the predetermined timing and proceeds to step 710. The value of the abnormal exhaust gas changeover valve-flag XECV is "0" at the present time, and therefore, the CPU 81 makes a "Yes" determination at step 710 to proceed to step 720. The value of the abnormal exhaust gas bypass valve-flag XEBV is "1" at the present time, and therefore, the CPU 81 makes a "No" determination at step 720 to proceed to step 760.

At stop 760, the CPU81 notifies the operator of the engine 10 that "the exhaust gas bypass valve 68 is abnormal". This notification is carried out by turning on a warning lamp which is not shown, or the like. Thereafter, the CPU 81 proceeds to step 770 to sets the value of the abnormality occurrence-flag XEMG at "1", and proceeds to step 795 at which the CPU 81 ends the present routine tentatively.

As indicated above, when the exhaust gas bypass valve 68 is abnormal, the first apparatus notifies the operator of the engine 10 that "the exhaust gas bypass valve 68 is abnormal".

Further, when the crank angle of any one of the cylinders coincides with the predetermined crank angle θf, the CPU 81 starts executing the routine from step 800 in FIG. 8 and proceeds to step 810. The value of the abnormality occurrence-flag XEMG is "1" at the present time, and therefore, the CPU 81 passes through step 810, step 840 and step 830 in this order and proceeds to step 895 at which the CPU81 ends the present routine tentatively. At this time, the emergency operation is carried out.

As described above, when the exhaust gas bypass valve 68 is abnormal, the first apparatus notifies the operator of the engine 10 that "the exhaust gas bypass valve 68 is abnormal" and performs "the emergency operation".

In addition, at this time, the CPU 81 starts executing the routine from step 600 in FIG. 6 at the predetermined timing and proceeds to step 605. The value of the abnormal exhaust gas bypass valve-flag XEBV is "1" at the present time, and therefore, the CPU 81 makes a "No" determination at step 605 to proceed to step 695 at which the CPU81 ends the present routine tentatively. That is, when the value of the abnormal exhaust gas bypass valve-flag XEBV is set at "1" once, the value of the abnormal exhaust gas bypass valve-flag XEBV is kept at "1" without executing the abnormality determination of the exhaust gas bypass valve 68 (step 615 to step 635, step650 and step 640). As a result thereof, the first apparatus maintains to perform "the emergency operation" while the first apparatus notifies the operator of the engine 10 that "the exhaust gas bypass valve 68 is abnormal".

As described above, the first apparatus is applied to an internal combustion engine 10 having:

 a plurality of superchargers (the high pressure supercharger 61 and the low pressure supercharger 62); and a plurality of control valves (the intake air changeover valve 64, the exhaust gas bypass valve 68 and the exhaust gas bypass valve 68).

The first apparatus comprises:

 an opening degree obtaining means (the exhaust gas changeover valve opening degree sensor 75) for obtaining each opening degree of control valves (the exhaust gas bypass valve 68) belonging to a first control valve group including only a part of the plurality of control valves (the exhaust gas bypass valve 68 among the intake air changeover valve 64, the exhaust gas bypass valve 68 and the exhaust gas bypass valve 68);
 an pressure obtaining means (the supercharging pressure sensor 73) for obtaining a pressure for determination, the pressure for determination (the supercharging pressure Pim) being at least one of: a pressure of the air (the supercharging pressure Pim) in at least one location in the intake air passage 32; and a pressure of the exhaust gas Ex in at least one location in the exhaust gas passage 42,
 an abnormality determining means (see the routine of FIG. 6) for determining whether or not at least one control valve (the exhaust gas bypass valve 68) among control valves (the intake air changeover valve 64 and the exhaust gas bypass valve 68) belonging to a second control valve group including control valves except for control valves (the exhaust gas bypass valve 68) belonging to the first control valve group among the plurality of control valves being abnormal by using: at least one opening degree (the opening degree Oecv of the exhaust gas bypass valve 68) obtained by the opening degree obtaining means 73; and the pressure for determination Pim obtained by the pressure obtaining means 73.

Furthermore, in the first apparatus, the abnormality determining means is configured so as to include:

 a first determining means (step 610 of FIG. 6) for determining whether or not at least one control valve (the exhaust gas bypass valve 68) among control valves belonging to the first control valve group is abnormal by only an opening degree Oecv of the at least one control valve 66 obtained by the opening degree obtaining means 75; and
 a second determining means (step 615 to step 635, step 650 and step 640 in FIG. 6) for determining whether or not at least one control valve (the exhaust gas bypass valve 68) among control valves belonging to the second control valve group is abnormal by at least one opening degree (the opening degree Oecv) obtained by the opening degree obtaining means 75 and the pressure for determination Pim obtained by the pressure obtaining means 73, when the at least one control valve 66 among control valves belonging to the first control valve group is determined not to abnormal (when the first apparatus makes a "Yes" determination at step 610).

As described above, in the first apparatus, the pressure obtaining means 73 is configured so as to obtain, as the pressure for determination, a supercharging pressure Pim brought by the plurality of the superchargers.

Furthermore, the at least one control valve (the first determining target control valve) 66 of which the first determining means determines the abnormality is a first determining target control valve configured so as to change an opening degree Oecv thereof in response to a first instruction signal (the instruction signal sent from the electric control apparatus 80 to the exhaust gas bypass valve actuator 66a). In addition, the at least one control valve (the second determining target control valve) 68 of which the second determining means determines the abnormality is a second determining target control valve configured so as to change an opening degree thereof in response to a second instruction signal (the instruction signal sent from the electric control apparatus 80 to the exhaust gas bypass valve actuator 68a).

The first apparatus configured as above comprises:

 a first controlling means (the electric control apparatus 80) for sending, when the engine 10 is operated in a predetermined operating condition (turbo mode 2), the first instruction signal to the first determining target control valve 66 so that the supercharging pressure Pim obtained by the pressure obtaining means 73 becomes the same as a referential supercharging pressure (the target supercharging pressure Pimtgt) determined based on the operating condition; and

a second controlling means (the electric control apparatus 80) for sending the second instruction signal to the second determining target control valve 68.

The first determining means is configured so as to determine that the first determining target control valve 66 is abnormal (step 645 of FIG. 6) if the absolute value of a first opening degree difference(|Oecv-Oecvtgt|), which is a difference, between an actual opening degree Oecv of the first determining target control valve 66 obtained by the opening degree obtaining means 75 and an opening degree Oecvtgt of the first determining target control value 66 determined by the first instruction signal, is equal to or more than a first opening degree DECV1.

Furthermore, the second determining means is configured in such a manner, when the first determining target control valve 66 is determined not to be abnormal (the CPU 81 makes a "Yes" determination at step 610), that: the second determining means obtains the opening degree Oacv of the first determining target control valve 66 as a first value Oecv1(step 620 of FIG. 6); and provides the second controlling means 80 with an instruction (step 625) so as to send, as the second instruction signal, an first opening degree changing instruction signal (the opening degree increasing instruction signal) that is to change the opening degree Oebv of the second determining target control valve 68 in order to determine whether or not the second determining target control valve 68 is abnormal, from the second controlling means 80 to the second determining target control valve 68, at a first time point equal to or after a time point at which the first value Oecv1 is obtained; and obtains an opening degree of the first determining target control valve Oecv as a second value Oecv2 at a second time point that is after a lapse of a first time period from the first time point; and then if the absolute value of an opening degree changing amount (|Oecv1 -Oecv2|), which is a difference between the second value Oecv2 and the first value Oecv1, is smaller than a predetermined first threshold changing amount Oecvth (when the CPU 81 makes a "No" determination at step 635), the second determining means determines that the second determining target control valve 68 is abnormal (step 650, step 640 and step 655).

More specifically, the second determining means is configured so as to determine, as a preliminary determination (step 650 of FIG. 6), that the second determining target control valve 68 is abnormal if the absolute value of the opening degree changing amount (|Oecv1-Oecv2|) is smaller than the first threshold changing amount Oecvth (when the CPU 81 makes a "No" determination at step 635); and then determine that the second determining target control valve 68 is abnormal (step 655 of FIG. 6) if an amount of times of the preliminary determination made in a time period from start to stop of the engine 10 is equal to or more than a first threshold amount of times EEBVth (when the amount of times of the preliminary determination EEBV is equal to or larger than the threshold amount of times of the preliminary determination EEBVth. That is, the CPU 81 makes a "Yes" determination at step 640). In addition, the amount of times of the preliminary determination EEBV is set at zero by the initial routine.

Thereby, the first apparatus can carry out the abnormality determination of both of the control valva belonging to the first control valve group (the first determining target control valve) 66 and the control valve belonging to the second control valve group (the second determining target control valve) 68 while maintaining the condition that the supercharging pressure Pim corresponds to the target supercharging pressure Pimtgt. Accordingly, the first apparatus can carry out the abnormality determination of the control values 66, 68 while keeping a reasonable drivability.

Furthermore, the first apparatus can carry out the abnormality determination of the control valves 66, 68 when the engine 10 is driven under a relatively low load operating area (the operating area where the turbo mode 2 is set), and thereby, the first apparatus can find abnormalities of control valves 66, 68 in an early stage.

(Second Embodiment)

Next will be described an apparatus for determining an abnormality of a control valve (hereinafter referred to as "the second apparatus") according to a second embodiment of the present invention is applied.

<Outline of Apparatus>

The second apparatus is applied to the engine that is the same as the engine 10 (see FIG. 1) to which the first apparatus is applied.

<Outline of Operations of the Apparatus>

The second apparatus is different from the first apparatus in "the abnormality determination of the intake air changeover valve 64 that is carried out based on the supercharging pressure Pim" after the abnormality determination of the exhaust gas bypass valve 68 is carried out.

Specifically, the second apparatus determines whether or not the exhaust gas changeover valve 66 normally operates by comparing an opening degree Oecv of the exhaust gas changeover valve 66 and an opening degree Oecvtgt of the exhaust gas changeover valve 66. Subsequently, the second apparatus sends an instruction signal for forcibly changing the opening degree Oacv of the intake air changeover valve 64 from the electric control apparatus 80 to the intake air changeover valve 64 (actually, to the intake air changeover valve actuator 64a), when the second apparatus determines that the exhaust gas changeover valve 66 is "normal". Then, the second apparatus compares a supercharging pressure Pim1 at a timing "before" the instruction signal is sent to the intake air changeover valve 64 with a supercharging pressure Pim2 at a timing "after" the instruction signal is sent to the intake air changeover valve 64, and thereby, determines whether or not the intake air changeover valve 64 normally operates. In addition, when at least one of the intake air changeover valve 64 and the exhaust gas changeover valve 66 is abnormal, the second apparatus notifies the operator of the engine 10 accordingly, and performs "the emergency operation".

<Abnormality Determination for Control Valve>

Next will be described methods to determine an abnormality of the control valve in the second apparatus.

The second apparatus makes a determination as to whether or not the exhaust gas changeover valve 66 normally operates, by the method as the first apparatus. Specifically, when the actual opening degree Oecv and the target opening degree Oecvtgt of the exhaust gas changeover valve 66 do not correspond each other (actually, when the absolute value of the difference between the actual opening degree Oecv and the target opening degree Oecvtgt is equal to or more than a predetermined value (second opening degree)), the second apparatus determines that the exhaust gas changeover valve 66 is "abnormal". On the other hand, when the actual opening degree Oecv and the target opening degree Oecvtgt of the exhaust gas changeover valve 66 correspond each other (actually, when the absolute value of the difference between the actual opening degree Oecv and the target opening degree Oecvtgt is smaller than the predetermined value (second opening degree)), the second apparatus determines that the exhaust gas changeover valve 66 is "normal".

Next, when the second apparatus determines that the exhaust gas changeover valve 66 is "normal", the second apparatus determines whether or not the intake air changeover valve 64 normally operates. Specifically, when a predetermined abnormality determining condition is satisfied in this case, the second apparatus obtains the supercharging pressure Pim1. After that, the second apparatus sends an instruction signal (opening degree changing signal) for forcibly changing the opening degree Oacv of the intake air changeover valve 64 to the intake air changeover valve 64 (actually, to the intake air changeover valve actuator 64a). Then, the second apparatus obtains the supercharging pressure Pim2 at a timing "after" the instruction signal is sent to the intake air changeover valve 64.

Then, when the absolute value of the changing amount of the supercharging pressure (|Pim2-Pim1|) between before and after the opening degree changing signal is sent to the intake air changeover valve 64 is smaller than a predetermined value Pimth, the second apparatus determines that the intake air changeover valve 64 is "abnormal". Hereinafter, this determination method will be referred to as "an abnormality determination method 2".

The "opening degree changing signal" that is sent to the intake air changeover valve 64 may include an instruction signal to "increase" the opening degree of the intake air changeover valve 64 and an instruction signal to "decrease" the opening degree of the intake air changeover valve 64. However, the principle of the abnormality determination method 2 is the same even when each instruction signal is sent to the intake air changeover valve 64. Accordingly, next will be described a reason why "whether or not the intake air changeover valve 64 normally operates" can be determined by the abnormality determination method 2, with an example that the instruction signal to "increase" the opening degree of the intake air changeover valve 64 (opening degree increasing instruction signal) is sent to the intake air changeover valve 64.

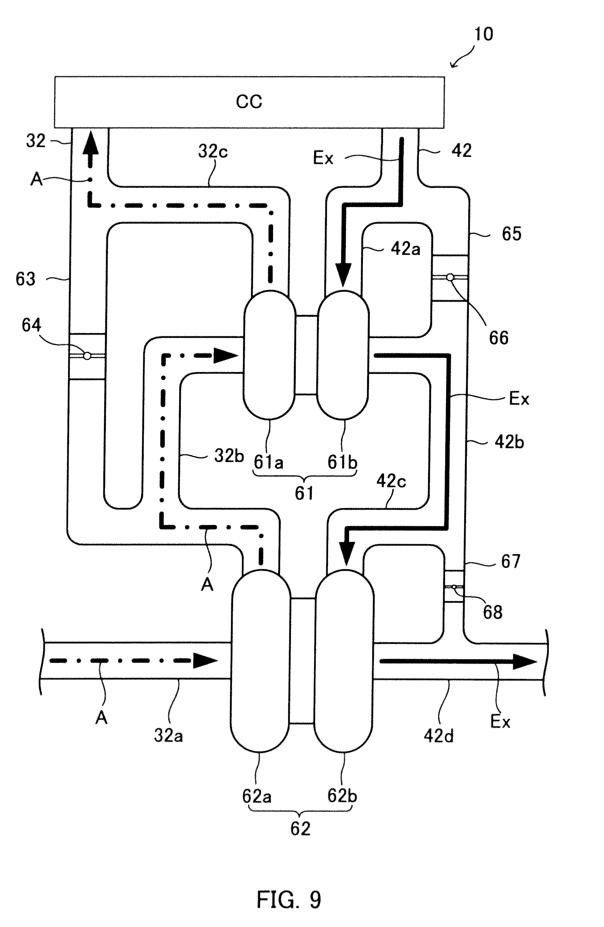

When the engine 10 is operated in "the turbo mode 2", all of the control valves that include the intake air changeover valve 64 are controlled to be "fully close" condition, as shown in FIG. 3(B). Accordingly, as shown in FIG. 9, an air (new air) A that is introduced in the intake air passage 32a (a part of the intake air passage 32) is introduced into the combustion chamber CC of the engine 10 through the low pressure compressor 62a, the intake air passage 32b (a part of the intake air passage 32) between the low pressure compressor 62a and the high pressure compressor 61 a, the high pressure compressor 61 a and the intake air passage 32c.

Furthermore, an exhaust gas Ex discharged from the combustion chamber CC is discharged to an outside of the engine 10, through the exhaust gas passage 42a (a part of the exhaust gas passage 42), the high pressure turbine 61 b, the exhaust gas passage 42b (a part of the exhaust gas passage 42) between the high pressure turbine 61 b and the low pressure turbine 62b, the low pressure turbine 62b, and the exhaust gas passage 42d.

As a result thereof, both of the high pressure turbine 61 b and the low pressure turbine 62b are driven, and then the new air A is compressed by the high pressure compressor 61 a and the low pressure compressor 62a.

Here, it is assumed that the opening degree of the intake air changeover valve 64 is maintained as the opening degree Oacv1 in the period "before" the opening degree changing signal is sent to the intake air changeover valve 64. When the opening degree increasing instruction signal is sent to the intake air changeover valve 64, the opening degree of the intake air changeover valve 64 is changed in response to the opening degree increasing instruction signal, if the intake air changeover valve 64 is normal.

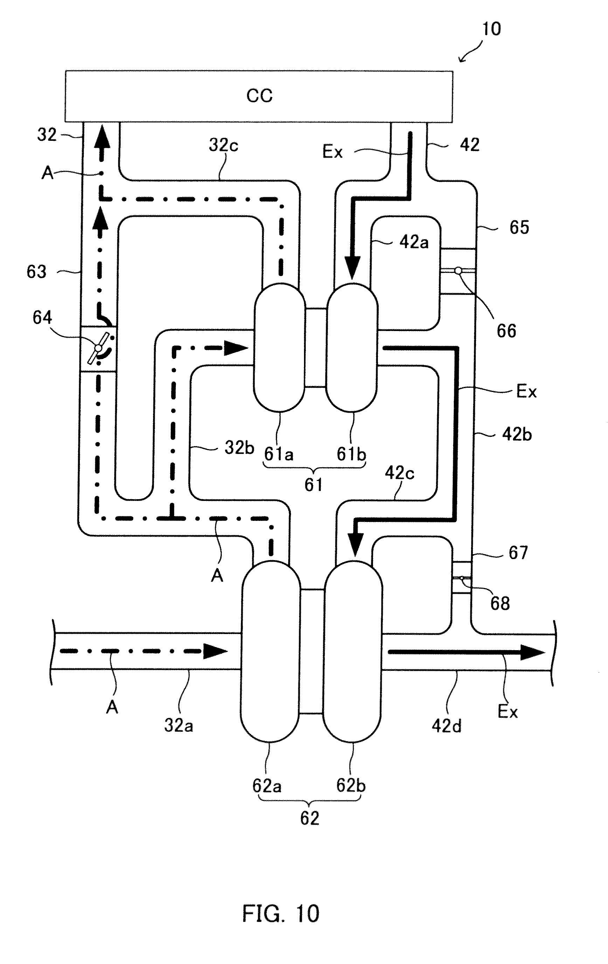

When the opening degree of the intake air changeover valve 64 is increased, a part of the new air A is introduced into the combustion chamber CC through the high pressure compressor-bypass passage section 63, as shown in FIG. 10. Accordingly, the amount of the new air A supplied to the high pressure compressor 61 a "after" the opening degree increasing instruction signal is sent to the intake air changeover value 64 decreases by an amount of the "part of the new air A" that pass through the high pressure compressor-bypass passage section 63, compared with the amount of the new air A supplied to the high pressure compressor 61 a "before" the opening degree changing signal is sent to the intake air changeover valve 64. This "part of the new air A" is not compressed by the high pressure compressor 61 a. As a result thereof, the supercharging pressure "decreases".

Therefore, when the exhaust gas changeover valve 66 is "normal", if the supercharging pressure Pim is changed when the opening degree increasing instruction signal is sent to the intake air changeover valve 64 (the absolute value of the difference between the supercharging pressure Pim1 and the supercharging pressure Pim2 is equal to or larger than the predetermined value Pimth), the intake air changeover valve 64 can be determined to be "normal". On the other hand, if the supercharging pressure Pim does not change at this case (the absolute value of the difference between the supercharging pressure Pim1 and the supercharging pressure Pim2 is smaller than the predetermined value Pimth), the intake air changeover valve 64 can be determined to be "abnormal".

In addition, as is understood from the above descriptions, the abnormality determination of the intake air changeover valve 64 can be also carried out by the abnormality determination method 2, in the case that an instruction signal to "decrease" the opening degree of the intake air changeover valve 64 (the opening degree decreasing instruction signal) is sent thereto. Furthermore, even when the engine 10 is not driven in the turbo mode 1, if the engine 10 is driven in such an operating condition that the supercharging pressure is changed when the opening degree of the intake air changeover valve 64 is changed, the abnormality determination of the intake air changeover valve 64 can be carried out by the abnormality determination method 2.

<Actual Operation>

Next will be described an actual operation of the second apparatus.

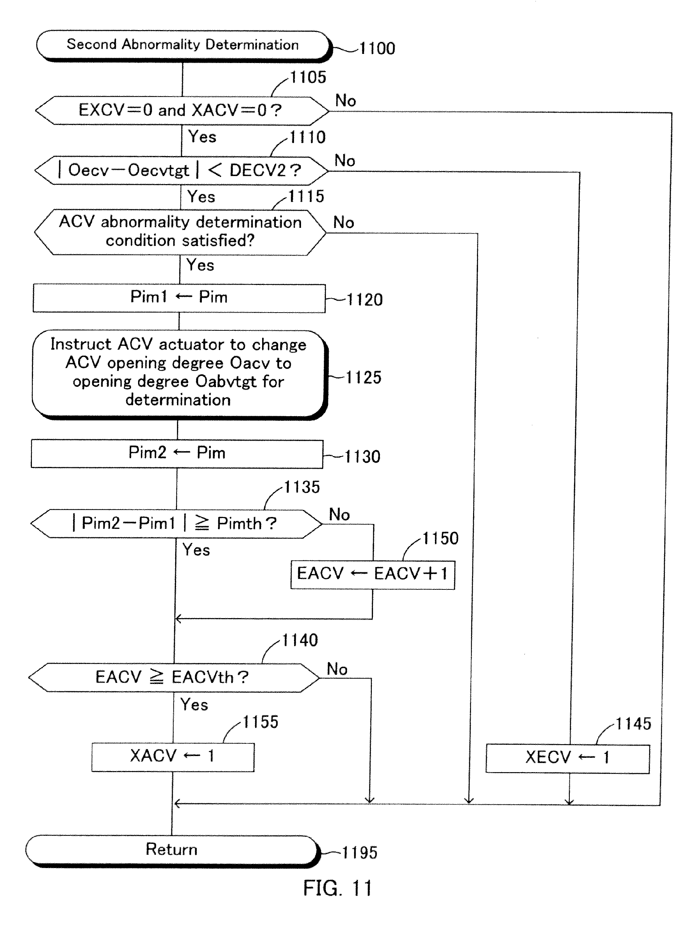

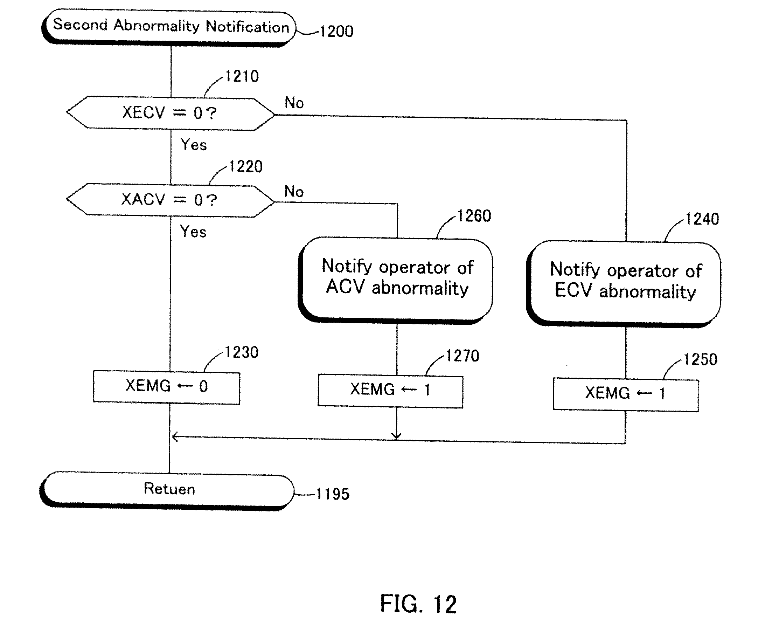

The second apparatus is different from the first apparatus only in a point that the second apparatus execute routines shown by flowcharts in FIG. 11 and FIG. 12 instead of the routines shown by the flowcharts in FIG. 6 and FIG. 7. Accordingly, an actual operation of the second apparatus, particularly regarding this difference, will be described below.

The CPU 81 executes routines each shown by flowcharts in FIG. 8, FIG. 11 and FIG. 12 every elapse of a predetermined time period. The CPU 81 uses an abnormal exhaust gas changeover valve-flag XECV, an abnormal exhaust gas bypass valve-flag XEBV, and an abnormality occurrence-flag XEMG.

The abnormal exhaust gas changeover valve-flag XECV indicates that the exhaust gas changeover valve 66 is not determined to be "abnormal," (is determined to be "normal"), when the value of the flag XECV is "0". The abnormal exhaust gas changeover valve-flag XECV indicates that the exhaust gas changeover valve 66 is determined to be "abnormal", when the value of the flag XECV is "1".

The abnormal air changeover valve-flag XACV indicates that the intake air changeover valve 64 is not determined to be "abnormal" (is determined to be "normal"), when the value of the flag XACV is "0". The abnormal intake air changeover valve-flag XACV indicates that the air changeover valve 64 is determined to be "abnormal", when the value of the flag XACV is "1".

The abnormality occurrence-flag XEMG indicates that both of the exhaust gas changeover valve 66 and the exhaust gas bypass valve 68 is determined to be "normal," when the value of the flag XEMG is "0". The abnormality occurrence-flag XEMG indicates that either the exhaust gas changeover valve 66 or the exhaust gas bypass valve 68 is determined to be "abnormal", when the value of the flag XEMG is "1".

All of values of flags are stored in the back-up RAM 84. Furthermore, all of values of the flags are set at "0" when a predetermined operation is done to the electric control apparatus 80 after it is determined that the exhaust gas changeover valve 66 and the exhaust gas bypass valve 68 are not abnormal, when the shipment of a car that is equipped with the engine 10 and when the car is subject to a periodic maintenance.

Next will be described each routine that is executed by the CPU 81 in detail. The CPU 81 executes "a second abnormality determining routine" shown by a flowchart in FIG. 11 every elapse of a predetermined time period. The CPU 81 determines whether or not either the intake air changeover valve 64 or the exhaust gas changeover valve 66 is abnormal or not.

Specifically, the CPU 81 starts executing the routine from step 1100 in FIG. 11 and proceeds to step 1105 at which the CPU 81 determines whether or not the value of the abnormal exhaust gas changeover valve-flag XECV is "0" as well as the value of the abnormal intake air changeover valve-flag XACV is "0". If at least one of the abnormal exhaust gas changeover valve-flag XECV and the value of the abnormal intake air changeover valve-flag XACV is "1" at the present time, the CPU 81 therefore makes a "No." determination at step 1105 to directly proceed to step 695 at which the CPU81 ends the present routine tentatively.

On the other hand, if the value of the abnormal exhaust gas changeover valve-flag XECV is "0" as well as the value of the abnormal intake air changeover valve-flag XACV is "0", the CPU 81 makes a "Yes" determination at step 1105 to proceed to step 1110. Next will be described under the assumption that the value of the abnormal exhaust gas changeover valve-flag XECV is "0" and the value of the abnormal intake air changeover valve-flag XACV is "0" at the present time.

The CPU 81 determines, at step 1110, whether or not the absolute value of the difference between the opening degree Oecv of the exhaust gays changeover valve 66 and the target opening degree Oecvtgt of the exhaust gas changeover valve 66 is smaller than the predetermined value DECV2. That is, the CPU 81 determines whether the exhaust gas changeover valve 66 is normal or abnormal at step 1110.

(Assumption 4)

The case that the both of the exhaust gas changeover valve 66 and the exhaust gas bypass valve 68 is normal

Here, it is assumed that the both of the intake air changeover valve 64 and the exhaust gas changeover valve 66 is normal. In this case, the opening degree Oecv of the exhaust gas changeover valve 66 corresponds to the target opening degree Oecvtgt of the exhaust gas changeover valve 66, and then the absolute value of the difference between the opening degree Oecv of the exhaust gas changeover valve 66 and the target opening degree Oecvtgt of the exhaust gas changeover valve 66 is smaller than the predetermined value DECV2. Accordingly, the CPU 81 makes a "Yes" determination at step 1110 to proceed to step 1115.

The CPU 81 determines, at step 1115, whether or not "the abnormality determination condition to determine whether or not the intake air changeover valve (ACV) 64 is abnormal (ACV abnormality determination condition)" is satisfied. Specifically, the CPU 81 determines, at step1115, that the ACV abnormality determination condition is satisfied when all of the following conditions are satisfied. In other words, the CPU 81 determines that the ACV abnormality determination condition is not satisfied when at least one of the following conditions is not satisfied.

(Condition 4) The supercharging pressure Pim is smaller than a predetermined value P.
(Condition 5) The engine 10 is being operated in the decelerate condition.
(Condition 6) The engine 10 has ever been driven in the turbo mode 2 for at least once in the time period from the engine 10 is started to the present time.

As indicated above, when the above condition 4 is satisfied, the supercharging pressure Pim can be adequately changed (decreased, in the second apparatus) along with the change of the opening degree of the intake air changeover valve 64, even when the opening degree of the intake air changeover valve 64 is forcibly changed (increased, in the second apparatus) according to "the abnormality determination method 2". In addition, when the above condition 5 is satisfied, a change of the output torque of the engine 10 due to the operation of "the abnormality determination method 2" can be less recognizable by the operator as "an unintentional change of torque". That is, "the abnormality determination method 2" can be carried out while keeping a reasonable drivability. As indicated above, all of the above condition 4 and the above condition 5 are satisfied, the abnormality determination of the intake air changeover valve 64 can be appropriately carried out by the above abnormality determination method 2.

In addition, when the above condition 6 is satisfied, a mis-determination on the abnormality determination of the intake air changeover valve 64 can be avoided by the same reason as that of the above condition 1. That is, in the case that "the fully-closed-adhesively-fixed abnormality" is occurred in the exhaust gas bypass valve 68, even when the abnormality determination of the exhaust gas bypass valve 68 (the above step 1110) is carried out when the engine 10 is driven in "the turbo mode 1", the exhaust gas bypass valve 68 is not determined to be "abnormal". If the abnormality determination of the intake air changeover valve 64 is carried out at this time (when the exhaust gas bypass valve 68 is abnormal), there is the possibility that the mis-determination is occurred.

However, if "an operation where the target opening degree of the exhaust gas changeover valve 66 is different from the fully open opening degree (that is, an operation according to the turbo mode 2)" is carried out before the abnormality determination of the intake air changeover valve 64, even if some abnormalities that include fully-closed-adhesively-fixed abnormality are occurred for the exhaust gas bypass valve 68, it can be surely determined that the exhaust gas bypass valve 68 is abnormal by the abnormality determination carried out in a time period that the operation is carried out. That is, when the above condition 6 is satisfied, a mis-determination on the abnormality determination of the intake air changeover valve 64 can be avoided.

In addition, "the decelerate condition" represents an operating condition where the required torque of the engine 10 is equal to or smaller than a predetermined threshold torque. Here, the required torque may be determined based on "the amount of the opening degree Accp", "the amount of the engine rotational speed NE" and "the fuel injection amount Q", etc. In other words, the conditions 2 may be such a condition that is satisfied when one or more of the following conditions is(are) satisfied. The conditions includes: the opening degree Accp of the accelerator pedal is equal to or smaller than a predetermined value Accpth; an operating condition is within "a predetermined opening degree defined by the opening degree Accp of the accelerator pedal and the engine rotational speed NE"; and a fuel injection amount Q that is determined based on the opening degree Accp of the accelerator pedal and the engine rotational speed NE is equal to or smaller than "a predetermined fuel injection amount that represents the decelerate condition".

When the above ACV abnormality determination condition is not satisfied at the present time, the CPU 81 makes a "No" determination at step 1115 to directly proceed to step 1195, and then at which the CPU81 ends the present routine tentatively. On the other hand, when the above ACV abnormality determination condition is satisfied at the present time, the CPU 81 makes a "Yes" determination at step 1115 to proceed to step 1120. Next will be described under the assumption that the ACV abnormality determination condition is satisfied at the present time.

The CPU 81 obtains the supercharging pressure Pim at the present time at step 1120, stores the obtained supercharging pressure Pim as "a supercharging pressure Pim as a third value", and proceeds to step 1125. It should be noted that this timing will be referred to as "a third timing".

Subsequently, at step 1125, the CPU 81 provides to the intake air changeover valve actuator 64a an instruction (opening degree increasing instruction) to change the opening degree Oacv of the intake air changeover valve 64 from an opening degree Oacv0 at the present time to an predetermined opening degree Oecvtgt for determination (Oacvtgt>Oacv). The CPU 81 thereafter waits until a predetermined time period has elapsed. Here, the timing after a lapse of the predetermined time period from the instruction signal is sent to the intake air changeover valve 64 is referred to as a "fourth timing".

In addition, in the second apparatus, the engine 10 is driven in the decelerate condition when the abnormality determination condition is satisfied. As is described with reference to FIG.3B, the control valves are controlled in accordance with "the turbo mode 1" when the engine 10 is driven in the decelerate condition. Accordingly, the opening degree Oacv (=Oacv0) is the fully open opening degree at the third timing. The opening degree Oacvtgt for determination is set to a value where the supercharging pressure Pim is changed by a sufficiently large amount when an actual opening degree of the intake air changeover valve 64 is changed from the opening degree Oacv at the third timing to the opening degree Oacvtgt for determination.

When the fourth timing comes, the CPU 81 proceeds to step 1130 at which the CPU 81 obtains the supercharging pressure Pim at the fourth timing, and stores the obtained supercharging pressure Pim as " an supercharging pressure Pim2 as a fourth value".

Subsequently, the CPU 81 proceeds to step 1135 at which the CPU 81 determines whether or not an absolute value of a difference between the supercharging pressure Pim2 and the supercharging pressure Pim1 is larger than or equal to a threshold changing amount Pimth. The threshold changing amount Pimth is also referred to as a the second threshold changing amount and is set to "a minimum value of the difference between the supercharging pressure Pim2 and the supercharging pressure Pim1 when the intake air changeover valve 64 is normal."

In addition, in the second apparatus, the predetermined value P is set so as to be a value that is equal to or more than the threshold changing amount Pimth. Thereby, when the opening degree of the intake air changeover valve 64 is increased from the opening degree Oacv to the opening degree Oacvtgt for determination, the supercharging pressure can be changed by an amount more than the above threshold changing amount Pimth. As a result thereof, the determination at step 1135 can be appropriately carried out.

According to the assumption 4, the intake air changeover valve 64 is normal, and then the absolute value of the difference between the supercharging pressure Pim2 and the supercharging pressure Pim1 is equal to or larger than the threshold changing amount Pimth. Therefore, the CPU 81 makes a "Yes" determination at step 1135 to proceed to step 1140.

At step 1140, the CPU 81 determines whether or not an amount of times of the preliminary determination for abnormality of the intake air changeover valve EACV (hereinafter referred to as a "amount of times of the preliminary determination") is equal to or larger than a threshold amount of times of the preliminary determination for abnormality of the intake air changeover valve EACVth (hereinafter referred to as a "the threshold amount of times of the preliminary determination EACVth"). The threshold amount of times of the preliminary determination EACVth is set to a predetermined value equal to or larger than 1. The amount of times of the preliminary determination EACV is set to zero by an initial routine executed when the ignition key switch (not shown) is turned ON from OFF.

According to the assumption 4, the intake air changeover valve 64 is normal, and then, the amount of times of the preliminary determination EACV is zero, which is set by the initial routine. Accordingly, the CPU 81 makes a "Yes" determination at step 1140 to proceed to step 1195 at which the CPU81 ends the present routine tentatively.

Furthermore, the CPU 81 exocutes "a second abnormality notifying routine" shown by a flowchart in FIG. 12 every elapse of a predetermined time period. By this routine, when at least one of the intake air changeover valve 64 and the exhaust gas changeover valve 66 is abnormal, the second apparatus notifies the operator of the engine 10 accordingly.

Specifically, the CPU 81 starts executing the routine from step 1200 in FIG. 12 and proceeds to step 1210 at which the CPU 81 determines whether or not the value of the abnormal exhaust gas changeover valve-flag XECV is "0". The value of the abnormal exhaust gas changeover valve-flag XECV is "0" at the present time, and therefore, the CPU 81 makes a "Yes" determination at step 1210 to proceed to step 1220.

The CPU 81 determines, at step 1220, whether or not the value of the abnormal intake air changeover valve-flag XACV is "0". The value of the abnormal intake air changeover valve-flag XACV is "0" at the present time, and therefore, the CPU 81 makes a "Yes" determination at step 1220 to proceed to step 1230.

At step 1230, the CPU 81 set the value of the abnormality occurrence-flag XEMG at "0". The abnormality occurrence-flag XEMG indicates that both of the intake air changeover valve 64 and the exhaust gas changeover valve 66 is determined to be "normal" when the value of the flag XEMG is "0". The abnormality occurrence-flag XEMG indicates that either the intake air changeover valve 64 or the exhaust gas changeover valve 66 is determined to be "abnormal", when the value of the flag XEMG is "1".

After that, the CPU 81 proceeds to step 1295 at which the CPU81 ends the present routine tentatively. Accordingly, when both of the intake air changeover valve 64 and the exhaust gas bypass valve 68 is normal (or, the both of the value of the abnormal intake air changeover valve-flag XACV and the value of the abnormal exhaust gas changeover valve-flag XECV is "0"), the second apparatus does not notify the operator.

Furthermore, the CPU 81 executes "a fuel supply control routine" shown by a flowchart in FIG. 8 every time when a crank angle of any one of the cylinders coincides with a predetermined crank angle θf (e.g., 90 °crank angle before a compression top dead center).

That is, as indicated in the above assumption 1, when the CPU 81 starts executing the routine from step 800 in FIG. 8, the CPU 81 proceeds to step 895 through step 810, step 820 and step 830.

Accordingly, the second apparatus performs "the normal operation" in which the fuel whose amount is equal to the fuel injection amount Q determined based can the fuel injection amount table for normal operating state MapMain (Accp, NE) is injected to the fuel injection cylinder, when both of the intake air changeover valve 64 and the exhaust gas bypass valve 68 is normal.

(Assumption 2)

The case that the exhaust gas changeover valve 66 is abnormal and intake air changeover valve 64 is normal

In this case, the opening degree Oecv of the exhaust gas changeover valve 66 does not correspond to the target opening degree Oecvtgt of the exhaust gas changeover valve 66, and then the absolute value of the difference between the opening degree Oecv of the exhaust gas changeover valve 66 and the target opening degree Oecvtgt of the exhaust gas changeover valve 66 is equal to or larger than the predetermined value DECV2.

Accordingly, when the CPU 81 starts executing the routine from step 1100 in FIG. 11 at the predetermined timing, and the CPU 81 proceeds to step 1110 through step 1105, the CPU 81 makes a "No" determination at step 1110 to proceed to step 1145. At step 1145, the CPU 81 set the value of the abnormal exhaust gas changeover valve-flag XECV at "1", and proceed to step 1195 at which the CPU81 ends the present routine tentatively.

In this case, when the CPU 81 starts executing the routine from step 1200 in FIG. 12, the CPU 81 proceeds to step 1210. The value of the abnormal exhaust gas changeover valve-flag XECV is "1" at the present time, and therefore, the CPU 81 makes a "No" determination at step 1210 to proceed to step 1240.

At step 1240, the CPU 81 notifies the operator of the engine 10 that "the exhaust gas bypass valve 68 is abnormal". This notification is carried out by turning on a warning lamp which is not shown, or the like. Thereafter, the CPU 81 proceeds to step 1250 to sets the value of the abnormality occurrence-flag XEMG at "1", and proceeds to step 1295 at which the CPU 81 ends the present routine tentatively.

As indicated above, when the exhaust gas bypass valve 68 is abnormal, the second apparatus notifies the operator of the engine 10 that "the exhaust gas bypass valve 68 is abnormal".

Furthermore, as is described in the above assumption 2, when the CPU 81 starts executing the routine from step 800 in FIG. 8, the CPU 81 proceeds to step 895 through step 810, step 840 and step 830.

Accordingly, when the exhaust gas changeover valve 66 is abnormal, the second apparatus notifies the operator of the engine 10 that "the exhaust gas changeover valve 66 is abnormal" and performs "the emergency operation".

In addition, when the CPU 81 starts executing the routine from step 1100 in FIG. 11 and proceeds to step 1105 at which the CPU 81 makes a "No" determination at step 1105 to proceed to step 1195 since the value of the abnormal exhaust gas changeover valve-flag XECV is "1 ". That is, when the value of the abnormal exhaust gas changeover valve-flag XECV is set at "1" once, the value of the abnormal exhaust gas changeover valve-flag XECV is kept at "1" without executing the abnormality determination of the exhaust gas bypass valve 68 (step 1110 of FIG. 11). As a result thereof, the first apparatus maintains to perform "the emergency operation" while the first apparatus notifies the operator of the engine 10 that "the exhaust gas changeover valve 66 is abnormal".

(Assumption 6)

The case that the intake air changeover valve 64 is abnormal and the exhaust gas changeover valve 66 is normal

In this case, the opening degree Oecv of the exhaust gas changeover valve 66 correspond to the target opening degree Oecvtgt of the exhaust gas changeover valve 66, and then the absolute value of the difference between the opening degree Oecv of the exhaust gas changeover valve 66 and the target opening degree Oecvtgt of the exhaust gas changeover valve 66 is smaller than the predetermined value DECV2.

Accordingly, when the CPU 81 starts executing the routine from step 1100 in FIG. 11 at the predetermined timing, and the CPU 81 proceeds to step 1110 through step 1105, the CPU 81 makes a "Yes" determination at step 1110 to proceed to step 1115. If the ACV abnormality determination condition is satisfied at the present time, the CPU 81 makes a "Yes" determination at step 1115 to proceed to step 1135 through steps 1120 to 1130.

According to the assumption 6, the intake air changeover valve 64 is abnormal, and therefore, the opening degree of the intake air changeover valve 64 is not sufficiently changed even when the opening degree changing signal is sent the intake air changeover valve actuator 64a at step 1125. Therefore, the absolute value of the difference between the supercharging pressure Pim1 before the opening degree changing signal is sent the intake air changeover valve actuator 64a and the supercharging pressure Pim2 after the opening degree changing signal is sent the intake air changeover valve actuator 64a is smaller than the threshold changing amount Pimth. Accordingly, the CPU 81 makes a "No" determination at step 1135 to proceed to step 1150.

At step 1150, the CPU 81 updates and determines the amount of times of the preliminary determination EACV in accordance with the following formula (2). In the following formula (2), EACV(k+1) represents the amount of times of the preliminary determination EACV to be updated by this execution, and EACV(k) represents the amount of times of the preliminary determination EACV before the value is updated by this execution. That is, the CPU 81 increases the amount of times of the preliminary determination EACV by an amount of 1.

$$EACV(k+1) = EACV(k) + 1 \qquad (2)$$

Subsequently, the CPU 81 proceeds to step 1140. The amount of times of the preliminary determination EACV is just increased by the amount of 1 from zero which is set by the initial routine. Therefore, if the threshold amount of times of the preliminary determination EACVth is set at equal to or larger than 2, the CPU 81 makes a "No" determination at step 1140 to proceed to step 1195 at which the CPU81 ends the present routine tentatively.

On the other hand, if the state that "the intake air changeover valve 64 is abnormal" as the assumption 6 is maintained, the execution of step 1150 repeatedly executed, and then, the amount of times of the preliminary determination EACV gradually increases to reach up to the threshold amount of times of the preliminary determination EACVth. At that time, when the CPU 81 executes the execution of step 1140, the CPU 81 makes a "Yes" determination at step 1140 to proceed to step 1155 to set the value of the abnormal intake air changeover valve-flag XACV at "1". After that, the CPU 81 proceeds to step 1195 at which the CPU81 ends the present routine tentatively.

At this time, the CPU 81 starts executing the routine from step 1200 in FIG. 12 at the predetermined timing and proceeds to step 1210, The value of the abnormal, exhaust gas changeover valve-flag XECV is "0" at the present time, and therefore, the CPU 81 makes a "Yes" determination at step 1210 to proceed to step 1220. The value of the abnormal intake air changeover valve-flag XACV is "1" at the present time, and therefore, the CPU 81 makes a "No" determination at step 1220 to proceed to step 1260.

At step 1260, the CPU81 notifies the operator of the engine 10 that "the intake air changeover valve 64 is abnormal" This notification is carried out by turning on a warning lamp which is not shown, or the like. Thereafter, the CPU 81 proceeds to step 1270 to sets the value of the abnormality occurrence-flag XEMG at "1", and proceeds to step 1295 at which the CPU 81 ends the present routine tentatively.

As indicated above, when the intake air changeover valve 64 is abnormal, the first apparatus notifies the operator of the engine 10 that "the intake air changeover valve 64 is abnormal".

Further, when the crank angle of any one of the cylinders coincides with the predetermined crank angle θf, the CPU 81 starts executing the routine from step 800 in FIG. 8 and proceeds to step 810. The value of the abnormality occurrence-flag XEMG is "1" at the present time, and therefore, the CPU 81 passes through step 810, step 840 and step 830 in this order and proceeds to step 895 at which the CPU81 ends the present routine tentatively. At this time, the emergency operation is carried out.

As described above, when the intake air changeover valve 64 is abnormal, the first apparatus notifies the operator of the engine 10 that "the intake air changeover valve 64 is abnormal" and performs "the emergency operation".

In addition, at this time, the CPU 81 starts executing the routine from step 1100 in FIG. 11 at the predetermined timing and proceeds to step 1105. The value of the abnormal intake air changeover valve-flag XACV is "1" at the present time, and therefore, the CPU 81 makes a "No" determination at step 1105 to proceed to step 1195 at which the CPU81 ends the present routine tentatively. That is, when the value of the abnormal intake air changeover valve-flag XACV is set at "1" once, the value of the abnormal intake air changeover valve-flag XACV is kept at "1" without executing the abnormality determination of the intake air changeover valve 64 (step 1115 to step 1135, step1150 and step 1140). As a result thereof, the second apparatus maintains to perform "the emergency operation" while the second apparatus notifies the operator of the engine 10 that "the intake air changeover valve 64 is abnormal".

As described above, in the second apparatus, the abnormality determining means is configured so as to further comprise a third determining means (step 1115 to step 1135, step 1150 and step 1140) for determining, when the at least one control valve (the exhaust gas changeover valve 66) among control valves belonging to the first control valve group is determined not to be abnormal (when the second apparatus make a "Yes" determination at step 1110), whether or not at least one control valve (the intake air changeover valve 64) among control valves belonging to the second control valve group is abnormal by only the pressure Pim for determination obtained by the pressure obtaining means 73.

In the second apparatus, as same as the first apparatus,

the pressure obtaining means 73 is configured so as to obtain, as the pressure Pim for determination, a supercharging pressure brought by the plurality of the superchargers.

Furthermore, the at least one control valve (the third determining target control valve) 66 of which the first determining means determines the abnormality is configured so as to change an opening degree thereof in response to a third instruction signal (the instruction signal sent from the electric control apparatus 80 to the exhaust gas changeover valve actuator 66a). in addition, the at least one control valve (the fourth determining target control valve) of which the third determining means determines the abnormality is configured so as to change an opening degree Oecv thereof in response to a fourth instruction signal (the instruction signal sent from the electric control apparatus 80 to the intake air changeover valve actuator 64a).

The second apparatus that is configured as above comprises:

a third controlling means (the electric control apparatus 80) for sending the third instruction signal to the third determining target control valve 66; and
a fourth controlling means (the electric control apparatus 80) for sending the fourth instruction signal to the fourth determining target control valve 64.

The second apparatus is configured so as to determine that the third determining target control valve 66 is abnormal (step 1145 of FIG. 11) if the absolute value of a second opening degree difference ($|Oecv-Oecvtgt|$), which is a difference between an actual opening degree Oecv of the third determining target control valve 66 obtained by the opening degree obtaining means 75 and an opening degree Oecvtgt of the third determining target control valve 66 determined by the third instruction signal, is equal to or more than a second opening degree DECV2.

Furthermore, the third determining means is configured in such a manner, when the third determining target control valve 66 is determined not to be abnormal (when the second apparatus makes a "yews" determination at step 1110), that: the second determining means obtains the supercharging pressure Pim as a third value Pim1 (step 1120 of FIG. 11); and provides the fourth controlling means 80 with an instruction so as to send, as the fourth instruction signal, a second opening degree changing instruction signal (opening degree increasing instruction signal) that is to change the opening degree of the fourth determining target control valve 64 in order to determine whether or not the fourth determining target control valve 64 is abnormal, from the fourth controlling means 80 to the fourth determining target control valve 64, at a third time point equal to or after the third value Pim1 is obtained; and obtains the supercharging pressure Pim as a fourth value Pim2 at a fourth time point that is after a lapse of a second time period from the third time point; and then if the absolute value of an supercharging pressure changing amount ($|Pim2-Pim1|$) which is a difference between the fourth value Pim2 and the third value Pim1 is smaller than a predetermined second threshold changing amount Pimth (the second apparatus makes a "No" determination at step 1135 of FIG. 11), the third determining means 80 determines that the fourth determining target control valve 64 is abnormal (step 1150, step 1140 and step 1155 of FIG. 11).

More specifically, the third determining means is configured so as to determine, as a preliminary determination, that the fourth determining target control valve 64 is abnormal (step 1155 of FIG. 11) if the absolute value of the supercharging pressure changing amount ($|Pim2-Pim1|$) is smaller than the second threshold changing amount Pimth (when the second apparatus makes a "No" determination at step 1135 of FIG. 11); and then determine that the fourth determining target control valve 64 is abnormal (step 1150 of FIG. 11) if an amount of times of the preliminary determination made in a time period from start to stop of the engine 10 is equal to or more than a second threshold amount of times EACVth (when the amount of times of preliminary determination EACV is equal to or more than the threshold amount of times of the preliminary determination EACVth. That is, when the second apparatus makes a "Yes" determination at step 1140). In addition, the amount of times of preliminary determination EACV is configured so as to be set at zero by the initial routine.

Thereby, the second apparatus can carry out the abnormality determination of the fourth determining target control valve 64 "after" the third determining target control valve 66 is determined to be normal, and therefore, the abnormality determination of the fourth determining target control valve can be carries out without considering the effect of the condition of the third determining target control valve 66 (normal or abnormal) on the supercharging pressure Pim. As a result thereof, the accuracy of the abnormality determination of the fourth determining target control valve 64 can be enhanced. Furthermore, as same as the first apparatus, an abnormality of control valves 64, 66 may be found in an early stage.

Furthermore, the third determining means is configured so as to provides the fourth controlling means 64 with an instruction to send the second opening degree changing instruction signal from the fourth controlling means 80 to the fourth determining target control valve when the engine 10 is operated under a decelerate condition (when the condition 5 is satisfied) on which at least a required torque for the engine 10 is equal to or smaller than a predetermined threshold torque.

Thereby, that change of torque when the opening degree of the fourth determining target control valve 64 is less recognizable by the operator as "an unintentional change of torque". Therefore, an abnormality determination of the fourth determining target control valve 64 can be carried out while keeping a reasonable drivability.

Furthermore, both of the first apparatus and the second apparatus,

one or more control valves (the exhaust gas changeover valve 66) belonging to the first control valve group is a butterfly valve. In addition, the second apparatus is configured so that only one control valve (the exhaust gas changeover valve 66) belongs to the first control valve group. Furthermore, one or more control valves belonging to the first control valve group (the exhaust gas changeover valve 66) is disposed in the exhaust gas passage 42.

The present invention is not limited to the above embodiments, but may be modified as appropriate without departing from the scope of the invention.

For example, in the first embodiment and the second embodiment, the abnormality determining means may be configured so as to, when the abnormality determining means determines that "one control valve" among the plurality of control valves is "abnormal", assume "the other control valve" that is different from the one control valve is "normal".

Furthermore, in the above embodiments, the apparatus for determining an abnormality of a control valve of the present invention is applied to the engine that is configured so that the high pressure supercharger 61 and the low pressure supercharger 62 are serially arranged, and comprises the intake air changeover valve 64 at the passage to bypass the high pressure compressor 61 a, the exhaust gas changeover valve 66 at the passage to bypass the high pressure turbine 61 b, and the exhaust gas bypass valve 68 at the passage to bypass the low pressure turbine 62b. On the other hand, the apparatus for determining an abnormality of a control valve of the present invention may be applied to an engine that is configured so that two or more (for example, three) superchargers are serially arranged, and comprises control valves at each passage to bypass each turbine of the superchargers and control valves at each passage to bypass each compressor of the superchargers.

Furthermore, the apparatus for determining an abnormality of a control valve of the present invention may be applied to an V-type engine that comprises a first bank and a second bank, the high pressure compressor at each intake air passage of the first bank and the second bank, the low pressure compressor at the merged portion of these intake air passages, the high pressure turbine at each exhaust gas passage of the first bank and the second bank, the low pressure turbine at the merged portion of these exhaust gas passages, control valves at each passage to bypass each turbine of the superchargers and control valves at each passage to bypass each compressor of the superchargers.

In addition, in the above embodiments, the opening degree sensor 75 is disposed at the exhaust gas changeover valve 66. On the other hand, the apparatus for determining an abnormality of a control valve of the present invention may be configured so as to dispose "an opening degree sensor" at "the exhaust gas bypass valve 68" instead of the exhaust gas changeover valve 66. In the apparatus for determining an abnormality of a control valve configured as above, the abnormality determination of the exhaust gas bypass valve 68 is carried out by using accrual opening degrees obtained by the opening degree sensor. Furthermore, when the exhaust gas bypass valve 68 is determined not to be abnormal and the engine is driven in the turbo mode 4 as well as the opening degree of the exhaust gas bypass valve 68 is under the supercharging pressure feedback control, if the opening degree of the determination target control valve (the intake air changeover valve 64 or the exhaust gas changeover valve 66) is forcibly changed, the apparatus determines the determination target control valve is normal when the absolute value of the changing amount of the opening degree of the exhaust gas bypass valve 68 is equal to or more than a predetermined value, or the determination target control valve is abnormal when the absolute value of the changing amount of the opening degree of the exhaust gas bypass valve 68 is less than a predetermined value.

Furthermore, the apparatus for determining an abnormality of a control valve of the present invention may be configured so as to dispose an opening degree sensor at "the intake air changeover valve 64" instead of the exhaust gas changeover valve 66. In the apparatus for determining an abnormality of a control valve configured as above, the abnormality determination of the intake air changeover valve 64 is carried out by using accrual opening degrees obtained by the opening degree sensor. Furthermore, when the intake air changeover valve 64 is determined not to be abnormal and the engine is driven in the turbo mode 3 as well as the opening degree of the intake air changeover valve 64 is under the supercharging pressure feedback control, if the opening degree of the determination target control valve (the exhaust gas changeover valve 66 or the exhaust gas bypass valve 68) is forcibly changed, the apparatus determines the determination target control valve is normal when the absolute value of the changing amount of the opening degree of the intake air changeover valve 64 is equal to or more than a predetermined value, or the determination target control valve is abnormal when the absolute value of the changing amount of the opening degree of the intake air changeover valve 64 is less than a predetermined value.

Furthermore, in the above embodiments, the pressure obtaining means is configured so as to obtain the supercharging pressure as the pressure for determination. On the other hand, the apparatus for determining an abnormality of a control valve of the present invention may be configured so that the pressure obtaining means obtains, as the pressure for determination, a pressure that is changed when an opening degree of a control valve is changed. That is, the portion where the pressure obtaining means obtains the pressure for determination may be a portion where a pressure of air or exhaust gas at the portion is changed when an opening degree of a control valve is changed.

Furthermore, in the above first embodiment, the second determination target control valve is determined to be abnormal when the amount of times of the preliminary determination (step 650 of FIG. 6) that the second determining target control valve (the exhaust gas bypass valve 68) is equal to or more than the threshold amount of times EEBVth (step 640 of FIG. 6). However, the apparatus for determining an abnormality of a control valve of the present invention may be configured so as to determine that the second determining target control valve is abnormal when the preliminary determination that the second determining target control valve is abnormal is done "once". That is, the apparatus for determining an abnormality of a control valve of the present invention may be configured so as to carry out "a routine that has a flow of FIG. 6 except for step 640 and step 650" instead of the routine of FIG. 6.

In the above second embodiment, the apparatus for determining an abnormality of a control valve of the present invention may be configured so as to determine that the fourth determining target control valve (the intake air changeover valve 64) is abnormal when the preliminary determination that the fourth determining target control valve is abnormal is done "once". That is, the apparatus for determining an abnormality of a control valve of the present invention may be configured so as to carry out "a routine that has a flow of FIG. 11 except for step 1140 and step 1150" instead of the routine of FIG. 11.

In addition, in the above embodiments, the opening degree sensor 75 is only disposed at the exhaust gas changeover valve 66. However, the apparatus for determining an abnormality of a control valve of the present invention may be configured so as to dispose opening degree sensor at one or two of control valves among the intake air changeover valve 64, the exhaust gas changeover valve 66 and the exhaust gas bypass valve 68.

Furthermore, in the above second embodiment, the condition 5 may be eliminated from the abnormality determination condition when the torque variation due to the change of the opening degree of the fourth determining target control valve (intake air changeover valve 64) does not need to be considered.

Furthermore, it is preferable that the apparatus for determining an abnormality of a control valve of the present invention is configured so that the abnormality determination of the intake air changeover valve 64 and the exhaust gas changeover valve 66 is carried out by the second apparatus, and then after the apparatus determines that the intake air changeover valve 64 and the exhaust gas changeover valve 66 are not abnormal, the first apparatus carries out the abnormality determination of the exhaust gas bypass valve 68.

**Claims**

1. An apparatus for determining an abnormality of a control valve of an internal combustion engine, the apparatus being applied to an internal combustion engine having:

a plurality of superchargers each comprising, a turbine disposed in an exhaust gas passage of the engine and driven by energy of an exhaust gas flowing in the exhaust gas passage, and a compressor disposed in an intake air passage of the engine and driven by the driven turbine and then compress an air in the intake air passage;and
a plurality of control valves each changing an amount of the air or a magnitude of the energy of the exhaust gas depending on an opening degree thereof,
the apparatus comprising:

an opening degree obtaining means for obtaining each opening degree of control valves belonging to a first control valve group including only a part of the plurality of control valves;
a pressure obtaining means for obtaining a pressure for determination, the pressure for determination being at least one of: a pressure of the air in at least one location in the intake air passage; and a pressure of the exhaust gas in at least one location in the exhaust gas passage,
an abnormality determining means for determining whether or not at least one control valve among control valves belonging to a second control valve group including control valves except for control valves belonging to the first control valve group among the plurality of control valves being abnormal by using: at least one opening degree obtained by the opening degree obtaining means; and the pressure for determination obtained by the pressure obtaining means.

2. The apparatus for determining an abnormality of a control valve of an internal combustion engine according to claim 1, wherein the abnormality determining means is configured so as to include:

a first determining means for determining whether or not at least one control valve among control valves belonging to the first control valve group is abnormal by only an opening degree of the at least one control valve obtained by the opening degree obtaining means; and

a second determining means for determining whether or not at least one control valve among control valves belonging to the second control valve group is abnormal by at least one opening degree obtained by the opening degree obtaining means and the pressure for determination obtained by the pressure obtaining means, when the at least one control valve among control valves belonging to the first control valve group is determined not to abnormal.

3. The apparatus for determining an abnormality of a control valve of an internal combustion engine according to claim 2, wherein the pressure obtaining means is configured so as to obtain, as the pressure for determination, a supercharging pressure brought by the plurality of the superchargers, the at least one control valve of which the first determining means determines the abnormality is a first determining target control valve configured so as to change an opening degree thereof in response to a first instruction signal, the at least one control valve of which the second determining means determines the abnormality is a second determining target control valve configured so as to change an opening degree thereof in response to a second instruction signal, the apparatus for determining an abnormality of a control valve further comprising:

a first controlling means for sending, when the engine is operated in a predetermined operating condition, the first instruction signal to the first determining target control valve so that the supercharging pressure obtained by the pressure obtaining means becomes the same as a referential supercharging pressure determined based on the operating condition; and

a second controlling means for sending the second instruction signal to the second determining target control valve, the first determining means is configured so as to determine that the first determining target control valve is abnormal if the absolute value of a first opening degree difference, which is a difference between an actual opening degree of the first determining target control valve obtained by the opening degree obtaining means and an opening degree of the first determining target control valve determined by the first instruction signal, is equal to or more than a first opening degree,

the second determining means is configured in such a manner, when the first determining target control valve is determined not to be abnormal, that: the second determining means obtains the opening degree of the first determining target control valve as a first value; and provides the second controlling means with an instruction so as to send, as the second instruction signal, an first opening degree changing instruction signal that is to change the opening degree of the second determining target control valve in order to determine whether or not the second determining target control valve is abnormal, from the second controlling means to the second determining target control valve, at a first time point equal to or after a time point at which the first value is obtained; and obtains an opening degree of the first determining target control valve as a second value at a second time point that is after a lapse of a first time period from the first time point; and then if the absolute value of an opening degree changing amount, which is a difference between the second value and the first value, is smaller than a predetermined first threshold changing amount, the second determining means determines that the second determining target control valve is abnormal.

4. The apparatus for determining an abnormality of a control valve of an internal combustion engine according to claim 3, wherein the second determining means is configured so as to determine, as a preliminary determination, that the second determining target control valve is abnormal if the absolute value of the opening degree changing amount is smaller than the first threshold changing amount; and then determine that the second determining target control valve is abnormal if an amount of times of the preliminary determination made in a time period from start to stop of the engine is equal to or more than a first threshold amount of times.

5. The apparatus for determining an abnormality of a control valve of an internal combustion engine according to claim 2, wherein the abnormality determining means is configured so as to further comprise a third determining means for determining, when the at least one control, valve among control valves belonging to the first control valve group is determined not to be abnormal,

whether or not at least one control valve among control valves belonging to the second control valve group is abnormal by only the pressure for determination obtained by the pressure obtaining means.

6. The apparatus for determining an abnormality of a control valve of an internal combustion engine according to claim 5,
wherein the pressure obtaining means is configured so as to obtain, as the pressure for determination, a supercharging pressure brought by the plurality of the superchargers,
the at least one control valve of which the first determining means determines the abnormality is a third determining target control valve configured so as to change an opening degree thereof in response to a third instruction signal.
the at least one control valve of which the third determining means determines the abnormality is a fourth determining target control valve configured so as to change an opening degree thereof in response to a fourth instruction signal,
the apparatus for determining an abnormality of a control valve further comprising:

a third controlling means for sending the third instruction signal to the third determining target control valve; and
a fourth controlling means for sending the fourth instruction signal to the fourth determining target control valve,
the first determining means is configured so as to determine that the third determining target control valve is abnormal if the absolute value of a second opening degree difference, which is a difference between an actual opening degree of the third determining target control valve obtained by the opening degree obtaining means and an opening degree of the third determining target control valve determined by the third instruction signal, is equal to or more than a second opening degree,
the third determining means is configured in such a manner, when the third determining target control valve is determined not to be abnormal, that: the second determining means obtains the supercharging pressure as a third value; and provides the fourth controlling means with an instruction so as to send, as the fourth instruction signal, a second opening degree changing instruction signal that is to change the opening degree of the fourth determining target control valve in order to determine whether or not the fourth determining target control valve is abnormal, from the fourth controlling means to the fourth determining target control valve, at a third time point equal to or after the third value is obtained; and obtains the supercharging pressure as a fourth value at a fourth time point that is after a lapse of a second time period from the third time point; and then if the absolute value of an supercharging pressure changing amount which is a difference between the fourth value and the third value is smaller than a predetermined second threshold changing amount, the third determining means determines that the fourth determining target control valve is abnormal.

7. The apparatus for determining an abnormality of a control valve of an internal combustion engine according to claim 6,
Wherein the third determining means is configured so as to determine, as a preliminary determination, that the fourth determining target control valve is abnormal, if the absolute value of the supercharging pressure changing amount is smaller than the second threshold changing amount; and then determine that the fourth determining target control valve is abnormal if an amount of times of the preliminary determination made in a time period from start to stop of the engine is equal to or more than a second threshold amount of times.

8. The apparatus for determining an abnormality of a control valve of an internal combustion engine according to claim 6 or claim 7,
wherein the third determining means is configured so as to provides the fourth controlling means with an instruction to send the second opening degree changing instruction signal from the fourth controlling means to the fourth determining target control valve when the engine is operated under a decelerate condition on which at least a required torque for the engine is equal to or smaller than a predetermined threshold torque.

9. The apparatus for determining an abnormality of a control valve of an internal combustion engine according to any one of claim 1 to claim 8,
wherein the abnormality determining means is configured so as to assume, when one control valve among the plurality of control valves is determined to be abnormal, that the other control valves other than the one control valve among the plurality of control valves are normal.

10. The apparatus for determining an abnormality of a control valve of an internal combustion engine according to any of claim 1 to claim 9,
one or more control valves belonging to the first control valve group is a butterfly valve.

11. The apparatus for determining an abnormality of a control valve of an internal combustion engine according to any one of claim 1 to claim 10,

wherein only one control valve belongs to the first control valve group.

12. The apparatus for determining an abnormality of a control valve of an internal combustion engine according to any one of claim 1 to claim 11, wherein one or more control valves belonging to the first control valve group is disposed in the exhaust gas passage.

FIG. 1

FIG. 2A

FIG. 2B

FIG. 3A

| Mode | 1 | 2 | 3 | 4 |
|---|---|---|---|---|
| ECV (exhaust gas chageover valve) | fully close | open | fully open | fully open |
| ACV (intake air changeover valve) | fully close | fully close | open | fully open |
| EBV (exhaust gas bypass valve) | fully close | fully close | fully close | open |

FIG. 3B

FIG. 4

FIG. 5

First Abnormality Determination — 600

EXCV=0 and XEBV=0 ? — 605
No →
Yes ↓

| Oecv−Oecvtgt | < DECV1 ? — 610
No →
Yes ↓

EBV abnormality determination condition satisfied? — 615
No →
Yes ↓

Oecv1 ← Oecv — 620

Instruct EBV actuator to change EBV opening degree Oecv to opening degree Oebvtgt for determination — 625

Oecv2 ← Oecv — 630

| Oecv2−Oecv1 | ≧ Oecvth ? — 635
No →
Yes ↓

EEBV ← EEBV+1 — 650

EEBV ≧ EEBVth ? — 640
No →
Yes ↓

XEBV ← 1 — 655

XECV ← 1 — 645

Return — 695

FIG. 6

First Abnormality Notification ⟋700

710

XECV = 0 ?   No

Yes

720

XEBV = 0 ?   No

Yes

760

Notify operator of
EBV abnormality

740

Notify operator of
ECV abnormality

730

XEMG ← 0

770

XEMG ← 1

750

XEMG ← 1

Return ⟋795

FIG. 7

FIG. 8

FIG. 9

FIG. 10

Second Abnormality Determination ～1100

EXCV＝0 and XACV＝0？ —1105 → No

Yes

$|\text{Oecv}-\text{Oecvtgt}| < \text{DECV2}$？ —1110 → No

Yes

ACV abnormality determination condition satisfied? —1115 → No

Yes

Pim1 ← Pim —1120

Instruct ACV actuator to change ACV opening degree Oacv to opening degree Oabvtgt for determination —1125

Pim2 ← Pim —1130

$|\text{Pim2}-\text{Pim1}| \geqq \text{Pimth}$？ —1135 → No

Yes

EACV ← EACV＋1 —1150

EACV $\geqq$ EACVth？ —1140 → No

Yes

XACV ← 1 —1155

XECV ← 1 —1145

Return ～1195

FIG. 11

EP 2 479 401 A1

```
        ╭─────────────────────────────────╮
        │ Second Abnormality Notification │──1200
        ╰─────────────────────────────────╯
                        │
                       ╱│╲  1210
                    ╱        ╲         No
                 ╱  XECV = 0 ?  ╲──────────────────────────────┐
                    ╲        ╱                                  │
                       ╲    ╱                                   │
                        Yes                                     │
                         │                                      │
                        ╱│╲  1220                               │
                     ╱       ╲       No                         │
                  ╱  XACV = 0 ?  ╲────────────┐                 │
                     ╲       ╱                │                 │
                        ╲   ╱                 │                 │
                        Yes             ╭──────────────╮  ╭──────────────╮
                         │              │ Notify operator│ │ Notify operator│
                         │         1260─│ of ACV         │ │ of ECV        │─1240
                         │              │ abnormality    │ │ abnormality   │
                         │              ╰──────────────╯  ╰──────────────╯
                         │                     │                 │
              ┌──────────────┐    ┌──────────────┐    ┌──────────────┐
        1230─ │  XEMG ← 0    │    │  XEMG ← 1    │─1270│  XEMG ← 1    │─1250
              └──────────────┘    └──────────────┘    └──────────────┘
                     │                   │                    │
                     │←──────────────────┘                    │
                     │←────────────────────────────────────────┘
              ╭──────────────╮
              │    Retuen    │──1195
              ╰──────────────╯
```

FIG. 12

| **INTERNATIONAL SEARCH REPORT** | International application No. |
|---|---|
| | PCT/JP2009/066863 |

**A. CLASSIFICATION OF SUBJECT MATTER**
*F02B39/16*(2006.01)i, *F02B37/013*(2006.01)i

According to International Patent Classification (IPC) or to both national classification and IPC

**B. FIELDS SEARCHED**

Minimum documentation searched (classification system followed by classification symbols)
F02B39/16, F02B37/013

Documentation searched other than minimum documentation to the extent that such documents are included in the fields searched
Jitsuyo Shinan Koho          1922–1996    Jitsuyo Shinan Toroku Koho    1996–2010
Kokai Jitsuyo Shinan Koho    1971–2010    Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-185684 A  (Toyota Motor Corp.),<br>20 August 2009 (20.08.2009),<br>paragraphs [0033] to [0044]; fig. 2<br>(Family: none) | 1,2,5<br>3,4,6-12 |
| Y | JP 2009-162124 A  (Toyota Motor Corp.),<br>23 July 2009 (23.07.2009),<br>abstract<br>(Family: none) | 3,4,6-12 |
| Y | JP 2002-047958 A  (Toyota Motor Corp.),<br>15 February 2002 (15.02.2002),<br>paragraph [0023]<br>(Family: none) | 4,7,8 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 January, 2010 (05.01.10) | 19 January, 2010 (19.01.10) |

| Name and mailing address of the ISA/<br>  Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2009/066863

| C (Continuation). | DOCUMENTS CONSIDERED TO BE RELEVANT | |
|---|---|---|
| Category* | Citation of document, with indication, where appropriate, of the relevant passages | Relevant to claim No. |
| Y | JP 2006-046246 A  (Nissan Motor Co., Ltd.), 16 February 2006 (16.02.2006), abstract (Family: none) | 8 |

Form PCT/ISA/210 (continuation of second sheet) (April 2007)

**EP 2 479 401 A1**

**Patent documents cited in the description**

- JP HEI3106133 B